# EUROPÄISCHE PATENTSCHRIFT

(11) **EP 3 676 991 B1**
(45) Veröffentlichungstag und Bekanntmachung des Hinweises auf die Patenterteilung: **27.01.2021**
(21) Anmeldenummer: 18779264.3
(22) Anmeldetag: 17.09.2018
(51) Int. Cl.: H04L 12/18

(54) **BAHNAUTOMATISIERUNGSNETZ SOWIE VERFAHREN ZUM ÜBERMITTELN VON NACHRICHTEN IN EINEM BAHNAUTOMATISIERUNGSNETZ**
RAILWAY AUTOMATION NETWORK AND METHOD FOR TRANSMITTING MESSAGES IN A RAILWAY AUTOMATION NETWORK
RÉSEAU D'AUTOMATISATION DE VOIE ET PROCÉDÉ DE COMMUNICATION DE MESSAGES DANS UN RÉSEAU D'AUTOMATISATION DE VOIE

(30) Priorität: 16.10.2017 DE 102017218460
(43) Veröffentlichungstag der Anmeldung: 08.07.2020
(73) Patentinhaber: Siemens Mobility GmbH, 81739 München (DE)
(72) Erfinder: ECKELMANN-WENDT, Uwe, 38302 Wolfenbüttel (DE); GERKEN, Stefan, 38116 Braunschweig (DE); HUTH, Hans-Peter, 80638 München (DE); RIEDL, Johannes, 84030 Ergolding (DE); SCHALLENBERG, Andreas, 31224 Peine (DE)
(86) Internationale Anmeldenummer: PCT/EP2018/075078
(87) Internationale Veröffentlichungsnummer: WO 2019/076559

(56) Entgegenhaltungen:
- WO-A1-2014/165024
- WO-A1-2017/004229
- US-A1- 2013 322 232

## Beschreibung

Bahnautomatisierungsnetze, d.h. im Bereich der Bahnautomatisierung eingesetzte Kommunikationsnetze beziehungsweise Steuerungssysteme, müssen im Rahmen ihres Betriebs hohe Anforderungen an die korrekte und zuverlässige Übertragung von Nachrichten, etwa in Form von Steuerungsinformationen, erfüllen. Ursache hierfür ist, dass die entsprechenden Übertragungseigenschaften unmittelbare Auswirkungen auf die signaltechnische Sicherheit, die auch als "Safety" bezeichnet wird, haben beziehungsweise haben können. Entsprechende Bahnautomatisierungsnetze beziehungsweise Bahnautomatisierungssysteme bestehen üblicherweise aus zumindest einer Kontrolleinheit, die eine Vielzahl von Endgeräten steuert oder von diesen Informationen abfragt und hierzu ein entsprechendes Kommunikationsnetz verwendet. Eine Eigenheit von Bahnautomatisierungsnetzen ist hierbei, dass sie üblicherweise eine große Anzahl von Geräten beziehungsweise Einheiten umfassen sowie häufig geografisch ausgedehnt sind, so dass sich ein verteiltes System mit Komponenten an unterschiedlichen Orten ergibt.

Bekannte Bahnautomatisierungsnetze weisen häufig den Nachteil vergleichsweise geringer Flexibilität und Skalierbarkeit auf. Dies bedeutet, dass Änderungen oder Erweiterungen des Bahnautomatisierungsnetzes, etwa durch das Hinzuführen neuer Komponenten, in der Regel nur in einem sehr begrenzten Umfang oder aber verbunden mit erheblichen Aufwänden und Kosten möglich sind.

Dokument WO 2017/004229 A1 umfasst ein Netzwerk aus Maschinen, die jeweils Sensoren und / oder Aktuatoren aufweisen. Jede Maschine ist einem Knoten zugeordnet, der in die Maschine integriert ist und / oder mit der Maschine kommuniziert, und der Rohdaten von den Sensoren und / oder Aktuatoren liefert. Jeder Knoten verfügt über eine Netzwerkschnittstelle sowie einen Prozessor und einen Speicher, die als Knotenagent konfiguriert sind. Eine Maschine empfängt und formatiert Nachrichten von den Knotenagenten neu. Die Maschine leitet die neu formatierten Nachrichten einschließlich der Rohdaten an Benutzergeräte weiter, um sie zur Verwaltung der Maschinenaktivität und / oder des Status zu verwenden.

Der vorliegenden Erfindung liegt die Aufgabe zugrunde, ein Bahnautomatisierungsnetz anzugeben, das besonders flexibel einsetzbar ist und eine weitgehende Skalierbarkeit erlaubt.

Die Erfindung stellt ein Bahnautomatisierungsnetz zur Verfügung, wobei das Bahnautomatisierungsnetz ein Publish/Subscribe-System aufweist mit zumindest einer zum Veröffentlichen von Nachrichten eingerichteten sendeseitigen Anwendung, zumindest einem sendeseitigen Nachrichtenbroker, zumindest einem empfangsseitigen Nachrichtenbroker sowie zumindest einer zum Empfangen von Nachrichten eingerichteten empfangsseitigen Anwendung, wobei jede sendeseitige Anwendung kommunikationstechnisch an den sendeseitigen Nachrichtenbroker oder einen der sendeseitigen Nachrichtenbroker angebunden ist, wobei der zumindest eine sendeseitige Nachrichtenbroker eingerichtet ist, eine von der sendeseitigen Anwendung oder einer der sendeseitigen Anwendungen veröffentlichte Nachricht anhand eines in der Nachricht angegebenen Themas auf zumindest zwei redundante, zumindest teilweise physikalisch unabhängige Netzpfade des Bahnautomatisierungsnetzes abzubilden, wobei das Bahnautomatisierungsnetz eingerichtet ist, die Nachricht simultan über die zumindest zwei Netzpfade an den empfangsseitigen Nachrichtenbroker oder zumindest einen der empfangsseitigen Nachrichtenbroker zu übermitteln, wobei jede empfangsseitige Anwendung kommunikationstechnisch an den empfangsseitigen Nachrichtenbroker oder einen der empfangsseitigen Nachrichtenbroker angebunden ist und wobei der empfangsseitige Nachrichtenbroker eingerichtet ist, die Nachricht an die zumindest eine empfangsseitige Anwendung zu übermitteln.

Das erfindungsgemäße Bahnautomatisierungsnetz zeichnet sich somit zunächst dadurch aus, dass es ein Publish/Subscribe-System aufweist. Dabei umfasst das Publish/Subscribe-System zumindest eine zum Veröffentlichen von Nachrichten eingerichtete sendeseitige Einrichtung, zumindest einen sendeseitigen Nachrichtenbroker, zumindest einen empfangsseitigen Nachrichtenbroker sowie zumindest eine zum Empfang von Nachrichten eingerichtete empfangsseitige Anwendung.

Entsprechende Publish/Subscribe-Systeme sind als solche aus anderen Anwendungsgebieten bekannt und ermöglichen allgemein die Entkopplung eines Informationsanbieters von einem Informationsempfänger. Dabei werden sendeseitige Anwendungen häufig auch als "Veröffentlicher" oder "Publisher" bezeichnet und empfangsseitige Anwendungen als "Subskribenten", "Subscriber" oder "Abonnenten".

Bezogen auf das erfindungsgemäße Bahnautomatisierungsnetz hat die Realisierung beziehungsweise Verwendung eines Publish/Subscribe-Systems zur Folge, dass sendeseitige und empfangsseitige Anwendungen einander nicht kennen müssen. Dies führt insbesondere dazu, dass für den Fall, dass eine weitere empfangsseitige Anwendung Nachrichten beziehungsweise Daten von der sendeseitigen Anwendung empfangen möchte, die sendeseitige Anwendung nicht geändert werden muss, um die Nachrichten zusätzlich auch noch an die weitere empfangsseitige Anwendung zu übertragen. Eine Nachricht wird von einer sendeseitigen Anwendung nicht direkt an spezifische empfangsseitige Anwendungen adressiert oder gesendet, sondern mittels eines Themas, das auch als "Topic" oder "Subject" bezeichnet werden kann, in eine Klasse kategorisiert ohne Wissen darüber, ob es für dieses Thema registrierte empfangsseitige Anwendungen gibt oder nicht. Basierend auf dem Thema und/oder weiteren in den Nachrichten enthaltenen (Adress-)Informationen, wie beispielsweise einer die sendeseitige Anwendung identifizierenden Kennung oder einem Nachrichtentyp ("Message Type"), als Selektionskriterium, können empfangsseitige Anwendungen ihr Interesse an Nachrichten registrieren. Damit kann eine empfangsseitige Anwendung Nachrichten empfangen, ohne Kenntnis davon zu haben, ob es überhaupt entsprechende sendeseitigen Anwendungen gibt und falls ja, welche. Die entsprechende Entkopplung zwischen den sendeseitigen Anwendungen und den empfangsseitigen Anwendungen erfolgt hierbei mittels der entsprechenden Nachrichtenbroker, d.h. des zumindest einen sendeseitigen sowie des zumindest einen empfangsseitigen Nachrichtenbrokers, die auch als Vermittlungseinrichtung, Nachrichtenverteiler oder Brokereinrichtungen bezeichnet werden können.

An dieser Stelle sei angemerkt, dass eine sendeseitige Anwendung häufig auch gleichzeitig eine empfangsseitige Anwendung sein wird, d.h. einerseits als "Publisher" von Nachrichten beziehungsweise Informationen und andererseits als "Subscriber" auftreten wird. Ebenso kann auch ein jeweiliger Nachrichtenbroker gleichzeitig sowohl als sendeseitiger als auch als empfangsseitiger Nachrichtenbroker dienen, in welchem Fall an den entsprechenden Nachrichtenbroker sowohl sendeseitige als auch empfangsseitige Anwendungen kommunikationstechnisch angebunden sind.

Es sei weiterhin darauf hingewiesen, dass es sich bei den genannten Komponenten des Publish/Subscribe-Systems um eine funktionale Architektur handelt, die hardware- und softwaretechnisch auf unterschiedliche Art und Weise realisiert werden kann. So ist es beispielsweise einerseits denkbar, dass jede der genannten Komponenten mittels einer eigenen, separaten Hardwareeinrichtung, etwa in Form eines entsprechenden Rechners, realisiert wird. Andererseits besteht jedoch auch die Möglichkeit, dass zumindest ein Teil der genannten Komponenten gemeinsam eine entsprechende Hardwareeinrichtung nutzt. Dies kann beispielsweise für eine oder mehrere sendeseitige Anwendungen und den oder die empfangsseitigen Nachrichtenbroker sowie in entsprechender Weise auch für den oder die empfangsseitigen Nachrichtenbroker und die zumindest eine empfangsseitige Anwendung gelten.

Bei dem erfindungsgemäßen Bahnautomatisierungsnetz ist jede sendeseitige Anwendung kommunikationstechnisch an den sendeseitigen Nachrichtenbroker oder einen der sendeseitigen Nachrichtenbroker angebunden. Dies bedeutet, dass der sendeseitigen Anwendung oder den sendeseitigen Anwendungen jeweils genau ein sendeseitiger Nachrichtenbroker zugeordnet ist. Somit erfolgt die Übermittlung von Nachrichten für die jeweilige sendeseitige Anwendung unter Zwischenschaltung dieses betreffenden sendeseitigen Nachrichtenbrokers. Dabei ist die Anbindung der jeweiligen sendeseitigen Anwendung an den jeweiligen sendeseitigen Nachrichtenbroker nicht notwendigerweise statisch oder permanent, sondern kann beispielsweise auch ausschließlich bei Bedarf, etwa vorbereitend zur Übermittlung einer Nachricht, erfolgen. Gleiches gilt analog in Bezug auf die jeweilige empfangsseitige Anwendung sowie den jeweiligen empfangsseitigen Nachrichtenbroker.

Erfindungsgemäß ist der zumindest eine sendeseitige Nachrichtenbroker eingerichtet, eine von der sendeseitigen Anwendung oder einer der sendeseitigen Anwendungen veröffentlichte Nachricht anhand eines in der Nachricht angegebenen Themas auf zumindest zwei redundante, zumindest teilweise physikalisch unabhängige Netzpfade des Bahnautomatisierungsnetzes abzubilden. Dabei ist die Formulierung "redundante, zumindest teilweise physikalisch unabhängige Netzpfade" so zu verstehen, dass die zumindest zwei Netzpfade zumindest auf einer Teilstrecke des jeweiligen Netzpfades unterschiedliche Netzinfrastruktur verwenden, so dass ein Ausfall oder eine Störung in der betreffenden Netzinfrastruktur des einen Netzpfades keine Auswirkungen auf die betreffende Netzinfrastruktur des anderen Netzpfades hat. Im Sinne einer möglichst weitgehenden Unabhängigkeit der zumindest zwei Netzpfade sind diese vorzugsweise möglichst weitgehend oder sogar vollständig physikalisch voneinander unabhängig. Dabei können die Netzpfade innerhalb eines zusammenhängenden Kommunikationsnetzes bestehen oder aber mittels mehrerer physisch beziehungsweise physikalisch getrennter "redundanter" Kommunikationsnetze gebildet werden.

Das erfindungsgemäße Bahnautomatisierungsnetz ist weiterhin eingerichtet, die Nachricht simultan über die zumindest zwei Netzpfade an den empfangsseitigen Nachrichtenbroker oder zumindest einen der empfangsseitigen Nachrichtenbroker zu übermitteln. Dabei ist "simultan" derart zu verstehen, dass die Nachricht (beziehungsweise eine Kopie derselben) über jeden der Netzpfade an den empfangsseitigen Nachrichtenbroker oder zumindest einen der empfangsseitigen Nachrichtenbroker übermittelt wird. Dies bedeutet, dass die Nachrichtenübertragung als solche redundant erfolgt. Konkret kann dies beispielsweise derart geschehen, dass zu sendende Nachrichten seitens der jeweiligen sendeseitigen Anwendung und/oder seitens des sendeseitigen Nachrichtenbrokers mit einer zusätzlichen eindeutigen Sequenznummer versehen werden und als Kopien über die zumindest zwei Netzpfade versendet beziehungsweise übermittelt werden. Vorzugsweise ist die Sequenznummer hierbei in Bezug auf das jeweilige Thema und in Bezug auf die jeweilige sendeseitige Anwendung eindeutig. Da sich hierdurch der eigentliche Inhalt nicht ändert, wird auch eine Kopie der Nachricht beziehungsweise eine um eine entsprechende Sequenznummer oder ähnliche Steuerinformationen ergänzte (Kopie der) Nachricht im Rahmen der vorliegenden Erfindung als "Nachricht" ("Message") bezeichnet.

Erfindungsgemäß ist weiterhin jede empfangsseitige Anwendung kommunikationstechnisch an den empfangsseitigen Nachrichtenbroker oder einen der empfangsseitigen Nachrichtenbroker angebunden und der empfangsseitige Nachrichtenbroker ist eingerichtet, die Nachricht an die zumindest eine empfangsseitige Anwendung zu übermitteln. Dies bedeutet, dass seitens des empfangsseitigen Nachrichtenbrokers die Nachricht an die zumindest eine empfangsseitige Anwendung übermittelt wird. Dabei handelt es sich bei der zumindest einen empfangsseitigen Anwendung um eine solche, die sich zuvor bei dem empfangsseitigen Nachrichtenbroker für einen Empfang von Nachrichten zu dem betreffenden Thema registriert hat.

Das erfindungsgemäße Bahnautomatisierungsnetz zeichnet sich dadurch aus, dass es durch die Verwendung eines Publish/Subscribe-Systems eine Entkopplung sendeseitiger sowie empfangsseitiger Anwendungen vornimmt, wodurch die Anwendungen keine Kenntnisse über mögliche Kommunikationspartner benötigen. Hierdurch wird vorteilhafterweise eine höhere Flexibilität dahingehend erzielt, dass auch im laufenden Betrieb des Bahnautomatisierungsnetzes neue sendeseitige und/oder empfangsseitige Anwendungen gestartet beziehungsweise hinzugefügt werden können oder auch bestehende Anwendungen zwischen Plattformen beziehungsweise Rechnern verschoben werden können. Dies ist vorteilhafterweise möglich, ohne dass eine Neukonfiguration des gesamten Bahnautomatisierungsnetzes verbunden mit einer entsprechenden Informationsverteilung an betroffene Anwendungen erforderlich ist. Hierdurch wird es beispielsweise ermöglicht, sendeseitige und/oder empfangsseitige Anwendungen in wenigen, größeren Rechenzentren zu bündeln, um die Betriebskosten zu reduzieren. Dabei können die Anwendungen weiterhin auch über unterschiedliche Rechnerplattformen oder Rechenzentren verteilt werden, um die Ausfallsicherheit zu erhöhen. Gleichzeitig können beispielsweise ergänzende Anwendungen, welche zum Beispiel eine Überwachung beziehungsweise ein "Monitoring" des Bahnautomatisierungsnetzes durchführen und eine zusätzliche Fehlerdiagnose oder sogar ein vorausschauendes Management zur Fehlervermeidung erlauben, dem Bahnautomatisierungsnetz flexibel hinzugefügt werden. Im Vergleich zu bekannten, in ihrer Konfiguration vergleichsweise starren Bahnautomatisierungsnetzen ist das erfindungsgemäße Bahnautomatisierungsnetz hierbei auch dahingehend besonders vorteilhaft, dass es weitgehend skalierbar ist, so dass Erweiterungen ohne grundlegende Änderungen der Netzarchitektur möglich sind.

Das erfindungsgemäße Bahnautomatisierungsnetz bietet weiterhin den Vorteil, dass es eine Übermittlung von Nachrichten über mehrere redundante, zumindest teilweise physikalisch unabhängige Netzpfade ermöglicht. Durch eine entsprechende simultane, d.h. im Wesentlichen gleichzeitige mehrfache Übermittlung der Nachricht beziehungsweise einer Kopie derselben über die mehreren Netzpfade wird hierbei eine deutliche Erhöhung der Robustheit und Zuverlässigkeit des Bahnautomatisierungsnetzes, insbesondere in Bezug auf mögliche Ausfälle von Teilen des Netzes, erzielt. Dabei ist zu beachten, dass das erfindungsgemäße Bahnautomatisierungsnetz unabhängig davon, ob tatsächlich eine Störung vorliegt oder nicht, eine simultane Übertragung der Nachrichten über die zumindest zwei Netzpfade realisiert. Dadurch, dass die vorhandene Netzredundanz in Bezug auf die zwei oder mehr Übertragungspfade generell genutzt wird und nicht erst im Fehlerfall, d.h. wenn eine Übermittlung einer Nachricht beispielsweise aufgrund eines Ausfalls von Teilen des verwendeten Kommunikationsnetzes fehlgeschlagen ist, wird hierbei eine zuverlässige und weitgehend verzögerungsfreie Übertragung von Nachrichten entsprechend den Anforderungen der Bahnautomatisierung gewährleistet.

Es sei darauf hingewiesen, dass das erfindungsgemäße Bahnautomatisierungsnetz in der Regel (ausschließlich) infrastrukturseitige Anwendungen beziehungsweise Komponenten umfassen wird. Dies bedeutet, dass es sich bei den jeweiligen Anwendungen insbesondere um solche handeln kann, die sich auf streckenseitig angeordnete Komponenten, etwa in Form von Signalen, Balisen, Radsensoren oder Weichen, beziehen. Dabei können insbesondere lokale Steuereinrichtungen der genannten Komponenten als sende- und/oder empfangsseitige Anwendungen mit entsprechenden stellwerksseitigen Steuer- beziehungsweise Kontrolleinheiten kommunizieren. Darüber hinaus besteht grundsätzlich jedoch auch die Möglichkeit, dass das erfindungsgemäße Bahnautomatisierungsnetz zusätzlich auch fahrzeugseitige Komponenten, d.h. sende- und/oder empfangsseitige Anwendungen, umfasst beziehungsweise gegebenenfalls ausschließlich aus diesen besteht. Bei entsprechenden Anwendungen kann es sich beispielsweise um eine fahrzeugseitige Steuereinrichtung eines Zugbeeinflussungssystems sowie mit dieser kommunikationstechnisch verbundene Sensoren handeln.

Erfindungsgemäß ist das Bahnautomatisierungsnetz außerdemeingerichtet, die Nachricht simultan an mehrere empfangsseitige Nachrichtenbroker zu übermitteln, die jeweils zumindest zwei Multicast-Gruppen zugeordnet sind, wobei jede der Multicast-Gruppen einen der redundanten, zumindest teilweise physikalisch unabhängigen Netzpfade des Bahnautomatisierungsnetzes verwendet. Die Verwendung des Multicast-Verfahrens ist vorteilhaft, da hierdurch sendeseitige Anwendungen Nachrichten an mehrere empfangsseitige Anwendungen verschicken können, wobei die jeweilige sendeseitige Anwendung ihre Nachricht aber lediglich einmal verschickt. Das Kommunikationsnetz, das hierfür Multicast unterstützen muss, wie dies beispielsweise bei Standard Ethernet (IEEE 802.3) sowie in IP-Netzen mit Unterstützung des "Protocol Independent Multicast Sparse Mode (PIM-SM)" der Fall ist, verteilt diese Nachricht dann selbstständig an alle interessierten empfangsseitigen Anwendungen, die der jeweiligen Multicast-Gruppe zugeordnet sind. Im Zusammenhang mit dem erfindungsgemäßen Bahnautomatisierungsnetz kann hierbei vorteilhafterweise für jedes Thema eine Abbildung auf zumindest zwei Multicast-Gruppen erfolgen, wobei der jeweiligen Multicast-Gruppe jeweils eine Multicast-Adresse zugeordnet ist. Durch die Verwendung von Multicast wird es somit vorteilhafterweise auf besonders einfache und effiziente Art und Weise ermöglicht, eine Nachricht gleichzeitig beziehungsweise simultan an mehrere empfangsseitige Nachrichtenbroker zu übermitteln. Dabei wird auch im Rahmen der Übermittlung mittels Multicast jeweils eine simultane Übermittlung der Nachricht über redundante zumindest teilweise physikalisch unabhängige Netzpfade des Bahnautomatisierungsnetzes realisiert beziehungsweise gewährleistet.

Zumindest für den Fall, dass die Nachricht über jeden der Netzpfade ungestört an den jeweiligen empfangsseitigen Nachrichtenbroker übermittelt wird, empfängt dieser die jeweilige Nachricht (beziehungsweise zumindest inhaltlich identische Kopien der Nachricht) mehrfach. Grundsätzlich besteht in dieser Situation nun die Möglichkeit, dass der jeweilige empfangsseitige Nachrichtenbroker jede der empfangenen Nachrichten auch an die jeweilige empfangsseitige Anwendung übermittelt beziehungsweise weiterleitet, in welchem Fall diese eine korrekte Behandlung mehrfach empfangener inhaltlich identischer Nachrichten gewährleisten muss.

Gemäß einer weiteren besonders bevorzugten Ausführungsform ist das erfindungsgemäße Bahnautomatisierungsnetz derart ausgestaltet, dass der zumindest eine empfangsseitige Nachrichtenbroker eingerichtet ist, aufgrund der redundanten Übermittlung der Nachricht empfangene Duplikate der Nachricht zu verwerfen. Dies ist vorteilhaft, da somit jede Nachricht von der jeweiligen empfangsseitigen Anwendung lediglich einmal empfangen wird. Dies wird dadurch realisiert, dass aufgrund der redundanten Übermittlung der Nachricht empfangene Duplikate der Nachricht, d.h. mit einer bereits empfangenen Nachricht identische Kopien der Nachricht, von dem jeweiligen empfangsseitigen Nachrichtenbroker verworfen werden. Konkret kann dies beispielsweise dadurch realisiert werden, dass zu sendenden Nachrichten von dem jeweiligen sendeseitigen Nachrichtenbroker mit einer zusätzlichen eindeutigen Sequenznummer versehen werden und die jeweilige Nachricht wie bereits beschrieben über die redundanten Netzpfade simultan übermittelt werden. Werden nunmehr von dem jeweiligen empfangsseitigen Nachrichtenbroker Nachrichten beziehungsweise Nachrichtenkopien über die unterschiedlichen Netzpfade empfangen, was in der Regel der Fall sein sollte, so leitet der empfangsseitige Nachrichtenbroker von diesen Nachrichten beziehungsweise Nachrichtenkopien, welche die gleiche Sequenznummer und gleichen Inhalt aufweisen, ausschließlich die zuerst empfangene Nachricht an die jeweilige empfangsseitige Anwendung weiter. Dies bedeutet, dass die redundante Nachrichtenübermittlung dahingehend durch die Nachrichtenbroker erzeugt wird, dass der jeweilige sendeseitige Nachrichtenbroker eingangsseitig Redundanz erzeugt, die dann ausgangsseitig von dem jeweiligen empfangsseitigen Nachrichtenbroker wieder entfernt wird. Folglich ist die durch die Nachrichtenbroker erzeugte beziehungsweise genutzte Netzredundanz für die Anwendungen, d.h. sowohl für die zumindest eine sendeseitige Anwendung als auch für die zumindest eine empfangsseitige Anwendung, nicht sichtbar. Damit wird auch diesbezüglich mittels der Nachrichtenbroker bei der Übermittlung der Nachrichten in dem jeweiligen Kommunikationsnetz eine Entkopplung von den Anwendungen erzielt.

Gemäß einer weiteren besonders bevorzugten Weiterbildung des erfindungsgemäßen Bahnautomatisierungsnetzes sind die Nachrichtenbroker zwecks Austauschs von Verwaltungsdaten mittels vorkonfigurierter Multicast-Gruppen untereinander kommunikationstechnisch verbunden. Dies gilt somit sowohl für den zumindest einen sendeseitigen Nachrichtenbroker als auch für den zumindest einen empfangsseitigen Nachrichtenbroker. Als Verwaltungsdaten werden hierbei solche Daten bezeichnet, die losgelöst von konkreten zwischen Anwendungen zu übertragenden Nachrichten zwischen den Nachrichtenbrokern ausgetauscht werden. Bei entsprechenden Verwaltungsdaten, die auch als Signalisierungsdaten bezeichnet werden können, kann es sich insbesondere um Daten beziehungsweise Informationen zu Publish/Subscribe-Beziehungen handeln. Dies bedeutet, dass die Nachrichtenbroker mittels der vorkonfigurierten Multicast-Gruppen beispielsweise Informationen zu neuregistrierten empfangsseitigen Anwendungen oder neu hinzugekommenen sendeseitigen Anwendungen und den jeweiligen Themen untereinander austauschen können. Vorzugsweise sind hierbei auch wiederum die vorkonfigurierten Multicast-Gruppen mehreren redundanten, zumindest teilweise physikalisch unabhängigen Netzpfaden des Bahnautomatisierungsnetzes zugeordnet, so dass auch bezüglich der entsprechenden Kommunikationsverbindungen, die auch als "Discovery Channel" bezeichnet werden können, der Nachrichtenbroker untereinander eine Netzredundanz und damit eine besonders hohe Zuverlässigkeit und Robustheit erzielt wird.

Vorzugsweise kann das erfindungsgemäße Bahnautomatisierungsnetz auch derart weitergebildet sein, dass das Bahnautomatisierungsnetz eingerichtet ist, ein verbindungsloses Protokoll, insbesondere das User Datagram Protocol, UDP, als Transportprotokoll zur Übermittlung der Nachricht zu verwenden. Dies ist vorteilhaft, da beispielsweise bei UDP im Unterschied zu TCP bei Verlust einer Nachricht beziehungsweise eines Telegramms keine Wiederholung der Übertragung erfolgt und hierdurch Verzögerungen durch einen Rückstau von Nachrichten vermieden werden. Dabei ist zu berücksichtigen, dass im Rahmen der Bahnautomatisierung aufgrund der bestehenden Echtzeitanforderungen veraltete Nachrichten aus Sicht einer Anwendung mit einem Verlust der betreffenden Nachricht gleichzusetzen sind. Weiterhin bietet beispielsweise UDP als Transportprotokoll den Vorteil, dass es eine Übermittlung von Nachrichten mittels Multicast unterstützt. Eine Verwendung eines verbindungslosen Protokolls wie UDP als Transportprotokoll zur Übermittlung von Nachrichten auch im Bereich der Bahnautomatisierung wird durch das erfindungsgemäße Bahnautomatisierungsnetz durch die simultane Übermittlung der Nachrichten über die zumindest zwei Netzpfade unterstützt beziehungsweise ermöglicht, da hierdurch eine höhere Übertragungsverlässlichkeit erzielt wird als sie UDP als solches bietet.

Gemäß einer besonders bevorzugten Ausführungsform des erfindungsgemäßen Bahnautomatisierungsnetzes ist die sendeseitige Anwendung eingerichtet, eine Nachricht zu veröffentlichen, die Selektionskriterien in Form des Themas und einer die sendeseitige Anwendung identifizierenden Kennung jeweils in Form einer innerhalb des Bahnautomatisierungsnetzes eineindeutigen Identität umfasst. Die Verwendung entsprechender eineindeutiger Identitäten, bei denen es sich beispielsweise um "Universally Unique Identifier" (UUID) oder auch "Globally Unique Identifier" (GUID) handeln kann, bietet den Vorteil, dass in dem verteilten Bahnautomatisierungsnetz auch ohne zentrale Koordination eine eindeutige Kennzeichnung sowohl des Themas als auch der die sendeseitige Anwendung identifizierenden Kennung ermöglicht wird. Eine entsprechende (ein)eindeutige Kennzeichnung ist Voraussetzung beziehungsweise Grundlage dafür, dass eine fehlerfreie und zuverlässige Kommunikation mittels des Bahnautomatisierungsnetzes möglich ist.

Das erfindungsgemäße Bahnautomatisierungsnetz kann weiterhin auch derart ausgestaltet sein, dass die sendeseitige Anwendung eingerichtet ist, eine Nachricht zu veröffentlichen, die eine Domänenkennung umfasst, durch die eine Mehrzahl von sendeseitigen Anwendungen als zusammengehörig gekennzeichnet wird. Dabei handelt es sich bei der Domänenkennung um eine Information, welche zusammengehörigen sendeseitigen Anwendungen gemeinsam ist. Beispielsweise kann es sich hierbei um eine Standortinformation handeln, d.h. beispielsweise eine Angabe der Art "Bayern-Süd", oder eine Angabe zu der jeweiligen Organisation (z.B. "Bayerische Oberlandbahn"). Die Kodierung der entsprechenden Information, d.h. der Domänenkennung, kann durch ein eigenes Adressfeld erfolgen oder durch eine entsprechende Strukturierung der Adresse der sendeseitigen Anwendungen. Dabei kann die Kodierung der Domäne binär oder textuell erfolgen. Vorteilhafterweise können seitens der empfangsseitigen Anwendungen beim Abonnieren von Nachrichten Suchmuster auf die Domänenkennung angewandt werden.

Gemäß einer weiteren besonders bevorzugten Ausgestaltung des erfindungsgemäßen Bahnautomatisierungsnetzes ist der sendeseitige Nachrichtenbroker eingerichtet, die Nachricht über jeden der zumindest teilweise physikalisch unabhängigen Netzpfade mehrfach zeitversetzt an den empfangsseitigen Nachrichtenbroker oder den zumindest einen der empfangsseitigen Nachrichtenbroker zu übermitteln. In diesem Fall wird somit neben der Netzredundanz durch die Übertragung über die mehreren Netzpfade zusätzlich eine Leitungsredundanz dahingehend realisiert, dass die jeweilige Nachricht über jeden der zumindest teilweise physikalisch unabhängigen Netzpfade mehrfach zeitversetzt übermittelt wird. Dabei wird der jeweilige Zeitversatz in der Regel vergleichsweise klein sein, d.h. beispielsweise in der Größenordnung von Millisekunden liegen. Dem liegt die Erkenntnis zugrunde, dass durch einen entsprechenden mehrfachen zeitversetzten Versand von Nachrichten die Verlustwahrscheinlichkeit bei gestörten Leitungen beziehungsweise gestörten Netzpfaden, d.h. insbesondere bei sporadisch, kurzzeitig auftretenden Störungen, verringert werden kann. Dabei kann eine entsprechende zusätzliche, mehrfach zeitversetzte Übermittlung mit einer konfigurierbaren Verzögerung und Wiederholungsanzahl geschehen. Auch in diesem Fall können vorzugsweise alle gesendeten Nachrichten mit einer zusätzlichen eindeutigen Sequenznummer versehen und als entsprechende Kopien versendet beziehungsweise übertragen werden. Bei Empfang von Nachrichten beziehungsweise Nachrichtenkopien mit gleicher Sequenznummer und gleichem Inhalt leitet der jeweilige empfangsseitige Nachrichtenbroker hierbei vorzugsweise wiederum lediglich die zuerst empfangene Nachricht beziehungsweise Nachrichtenkopie an die jeweilige empfangsseitige Anwendung weiter. Hierdurch wird vorteilhafterweise erreicht, dass für die empfangsseitigen Anwendungen die mehrfache zeitversetzte Übermittlung der Nachrichten nicht sichtbar ist und diese damit seitens der empfangsseitigen Anwendungen auch nicht zu berücksichtigt werden braucht. Die zuvor beschriebene bevorzugte Ausführungsform des erfindungsgemäßen Bahnautomatisierungsnetzes ist insbesondere im Falle einer Verwendung eines verbindungslosen Protokolls, wie beispielsweise UDP, vorteilhaft, da bei entsprechenden Protokollen Verluste von Nachrichten zulässig sind. Hingegen würde eine Nachricht bei einem verbindungsbehafteten Protokoll, wie beispielsweise TCP, im Falle ihres Verlustes durch das Protokoll selbst wiederholt werden. Dies bringt jedoch den Nachteil mit sich, dass hierdurch Verzögerungen oder "Staus" auftreten können.

Vorzugsweise kann das erfindungsgemäße Bahnautomatisierungsnetz auch derart ausgestaltet sein, dass zumindest eine der Anwendungen redundant vorhanden ist. Wie bereits erläutert, bietet das erfindungsgemäße Bahnautomatisierungsnetz erhebliche Vorteile in Bezug auf Flexibilität und Skalierbarkeit. Im Sinne einer Lastverteilung und/oder einer Erhöhung der Ausfallsicherheit besteht hierbei insbesondere die Möglichkeit beziehungsweise der Vorteil, dass Anwendungen, d.h. sendeseitige und/oder empfangsseitige Anwendungen, ohne Mehraufwand mehrfach redundant an beliebigen Orten an dem Bahnautomatisierungsnetz beziehungsweise Bahnautomatisierungssystem teilnehmen können, ohne dass hierfür eine Kommunikationsumschaltung erforderlich ist.

Die Erfindung betrifft des Weiteren ein Verfahren zum Übermitteln von Nachrichten in einem Bahnautomatisierungsnetz.

Hinsichtlich des Verfahrens liegt der vorliegenden Erfindung die Aufgabe zugrunde, ein besonders flexibel einsetzbares und zugleich eine weitgehende Skalierbarkeit erlaubendes Verfahren zum Übermitteln von Nachrichten in einem Bahnautomatisierungsnetz anzugeben.

Die Erfindung stellt ein Verfahren zum Übermitteln von Nachrichten in einem Bahnautomatisierungsnetz zur Verfügung, wobei in dem Bahnautomatisierungsnetz ein Publish/Subscribe-System eingerichtet wird mit zumindest einer zum Veröffentlichen von Nachrichten eingerichteten sendeseitigen Anwendung, mit zumindest einem sendeseitigen Nachrichtenbroker, wobei jede sendeseitige Anwendung kommunikationstechnisch an den sendeseitigen Nachrichtenbroker oder einen der sendeseitigen Nachrichtenbroker angebunden ist, mit zumindest einer zum Empfangen von Nachrichten eingerichteten empfangsseitigen Anwendung sowie mit zumindest einem empfangsseitigen Nachrichtenbroker, wobei jede empfangsseitige Anwendung kommunikationstechnisch an den empfangsseitigen Nachrichtenbroker oder einen der empfangsseitigen Nachrichtenbroker angebunden ist, wobei eine von der sendeseitigen Anwendung oder einer der sendeseitigen Anwendungen veröffentlichte Nachricht von dem betreffenden sendeseitigen Nachrichtenbroker anhand eines in der Nachricht angegebenen Themas auf zumindest zwei redundante, zumindest teilweise physikalisch unabhängige Netzpfade des Bahnautomatisierungsnetzes abgebildet wird, wobei die Nachricht simultan über die zumindest zwei Netzpfade an den empfangsseitigen Nachrichtenbroker oder zumindest einen der empfangsseitigen Nachrichtenbroker übermittelt wird, und wobei die Nachricht von dem zumindest einen empfangsseitigen Nachrichtenbroker an die zumindest eine empfangsseitige Anwendung übermittelt wird.

Die Vorteile des erfindungsgemäßen Verfahrens entsprechen denjenigen des erfindungsgemäßen Bahnautomatisierungsnetzes, so dass diesbezüglich auf die entsprechenden vorstehenden Ausführungen verwiesen wird. Gleiches gilt hinsichtlich der im Folgenden genannten bevorzugten Weiterbildungen des erfindungsgemäßen Verfahrens in Bezug auf die jeweilige entsprechende bevorzugte Weiterbildung des erfindungsgemäßen Bahnautomatisierungsnetzes, so dass auch diesbezüglich auf die entsprechenden vorstehenden Erläuterungen verwiesen wird.

Erfindungsgemäß ist außerdem vorgesehen, dass die Nachricht simultan an mehrere empfangsseitige Nachrichtenbroker übermittelt wird, die jeweils zumindest zwei Multicast-Gruppen zugeordnet sind, wobei für jede der Multicast-Gruppen einer der redundanten, zumindest teilweise physikalisch unabhängigen Netzpfade des Bahnautomatisierungsnetzes verwendet wird.

Gemäß einer weiteren besonders bevorzugten Ausführungsform des erfindungsgemäßen Verfahrens werden aufgrund der redundanten Übermittlung der Nachricht empfangene Duplikate der Nachricht von dem empfangsseitigen Nachrichtenbroker oder dem zumindest einen der empfangsseitigen Nachrichtenbroker verworfen.

Vorzugsweise kann das erfindungsgemäße Verfahren auch derart ausgestaltet sein, dass durch die Nachrichtenbroker mittels vorkonfigurierter Multicast-Gruppen untereinander Verwaltungsdaten ausgetauscht werden.

Gemäß einer besonders bevorzugten Weiterbildung des erfindungsgemäßen Verfahrens wird ein verbindungsloses Protokoll, insbesondere das User Datagram Protocol, UDP, als Transportprotokoll zur Übermittlung der Nachricht verwendet.

Vorzugsweise kann das erfindungsgemäße Verfahren weiterhin auch derart fortgebildet sein, dass von der sendeseitigen Anwendung eine Nachricht veröffentlicht wird, die Selektionskriterien in Form des Themas und einer die sendeseitige Anwendung identifizierenden Kennung jeweils in Form einer innerhalb des Bahnautomatisierungsnetzes eineindeutigen Identität umfasst.

Gemäß einer weiteren besonders bevorzugten Weiterbildung des erfindungsgemäßen Verfahrens wird von der sendeseitigen Anwendung eine Nachricht veröffentlicht, die eine Domänenkennung umfasst, durch die eine Mehrzahl von sendeseitigen Anwendungen als zusammengehörig gekennzeichnet wird.

Vorzugsweise kann das erfindungsgemäße Verfahren auch derart ausgestaltet sein, dass die Nachricht von dem sendeseitigen Nachrichtenbroker über jeden der zumindest teilweise physikalisch unabhängigen Netzpfade mehrfach zeitversetzt an den empfangsseitigen Nachrichtenbroker oder den zumindest einen der empfangsseitigen Nachrichtenbroker übermittelt wird.

Im Folgenden wird die Erfindung anhand von Ausführungsbeispielen näher erläutert. Zur Erläuterung von Ausführungsbeispielen des erfindungsgemäßen Verfahrens zeigt hierzu
- Figur 1: in einer schematischen Skizze ein Bahnautomatisierungsnetz,
- Figur 2: in einer schematischen Skizze ein erstes Ausführungsbeispiel des erfindungsgemäßen Bahnautomatisierungsnetzes,
- Figur 3: in einer schematischen Skizze ein zweites Ausführungsbeispiel des erfindungsgemäßen Bahnautomatisierungsnetzes,
- Figur 4: in einer schematischen Skizze ein drittes Ausführungsbeispiel des erfindungsgemäßen Bahnautomatisierungsnetzes und
- Figur 5: in einer schematischen Skizze ein viertes Ausführungsbeispiel des erfindungsgemäßen Bahnautomatisierungsnetzes.

In den Figuren werden für gleiche oder gleichwirkende Komponenten aus Gründen der Übersichtlichkeit die gleichen Bezugszeichen verwendet.

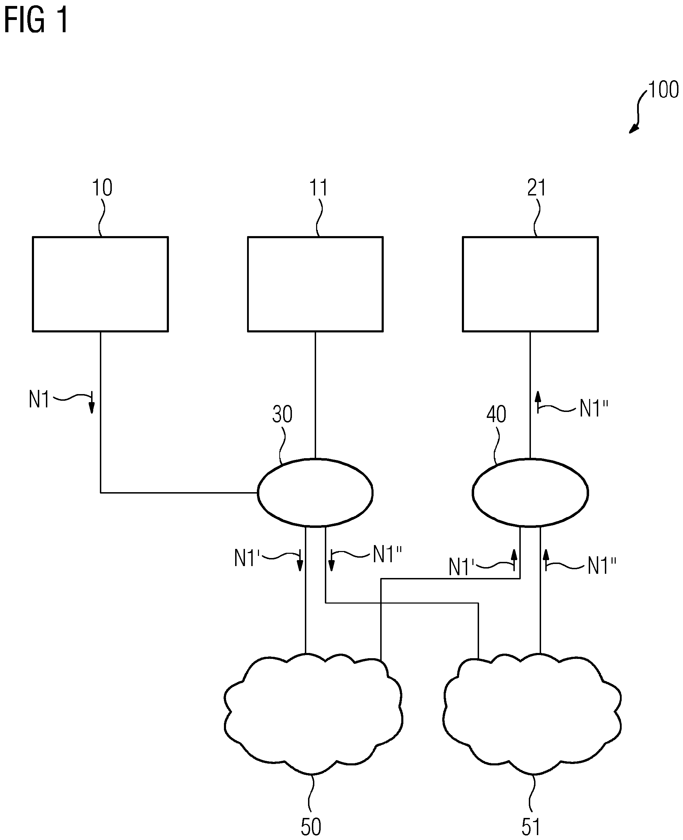

Figur 1 zeigt in einer schematischen Skizze ein Bahnautomatisierungsnetz . Im Detail ist hierbei ein Bahnautomatisierungsnetz 100 dargestellt, das Anwendungen 10, 11 und 21 umfasst. Dabei sind die Anwendungen 10, 11, 21 Bestandteil eines Publish/Subscribe-Systems des Bahnautomatisierungsnetzes 100. Hierbei sei angenommen, dass es sich bei den Anwendungen 10 und 11 um sendeseitige Anwendungen, d.h. "Publisher", und bei der Anwendung 21 um eine empfangsseitige Anwendung, d.h. einen "Subscriber", des Publish/Subscribe-Systems handelt. Zur Vermeidung von Missverständnissen sei darauf hingewiesen, dass in der Praxis eine Anwendung häufig zugleich "Publisher" und "Subscriber", d.h. zugleich sendeseitige und empfangsseitige Anwendung sein wird. Die vorgenommene Unterscheidung zwischen den sendeseitige Anwendungen 10, 11 und der empfangsseitigen Anwendung 21 dient damit im Rahmen der Beschreibung der Ausführungsbeispiele primär dazu, die Art und Weise der Übertragung von Nachrichten in dem Bahnautomatisierungsnetz 100 zu erläutern.

In der schematischen Darstellung der Figur 1 ist weiterhin ein sendeseitiger Nachrichtenbroker 30 sowie ein empfangsseitiger Nachrichtenbroker 40 angedeutet, die vorzugsweise jeweils als Software-Komponenten realisiert sind. Wie durch entsprechende Verbindungslinien angedeutet, sind die sendeseitigen Anwendungen 10, 11 hierbei kommunikationstechnisch an den sendeseitigen Nachrichtenbroker 30 und die empfangsseitige Anwendung 21 an den empfangsseitigen Nachrichtenbroker 40 angebunden. Die entsprechende kommunikationstechnische Anbindung kann hierbei auf beliebige, für sich bekannte Art und Weise erfolgen, d.h. insbesondere sowohl drahtgebunden als auch drahtlos. Auch hinsichtlich der Nachrichtenbroker 30, 40 sei an dieser Stelle angemerkt, dass an diese in der Praxis jeweils sowohl sendeseitige als auch empfangsseitige Anwendungen angebunden sein können, so dass die Nachrichtenbroker 30, 40 in diesem Fall sowohl als sendeseitige als auch als empfangsseitige Nachrichtenbroker fungieren.

Die von den sendeseitigen Anwendungen 10, 11 an den sendeseitigen Nachrichtenbroker 30 übermittelten Nachrichten können grob in zwei Arten unterteilt werden. Einerseits kann es sich hierbei um Signalisierungsnachrichten der sendeseitigen Anwendungen 10, 11 handeln, zum Beispiel in Form eines Wunsches etwas zu abonnieren ("Subscribe"). Andererseits kann es sich um Anwendungsnachrichten handeln, welche an andere Anwendungen, vorliegend die empfangsseitige Anwendung 21, ausgeliefert werden.

Im Rahmen des beschriebenen Beispiels sei angenommen, dass die sendeseitige Anwendung 10 eine Nachricht N1 in Form einer Anwendungsnachricht veröffentlicht. Dies bedeutet, dass entsprechend der üblichen Vorgehensweise in Publish/Subscribe-Systemen die Nachricht N1 von der sendeseitigen Anwendung 10 nicht an einen bestimmten Adressaten geschickt wird, sondern mit Adressinformationen versehen publiziert beziehungsweise veröffentlicht wird. Dabei bestehen die Adressinformationen aus einer Angabe zum Absender der Nachricht N1, d.h. einer die sendeseitige Anwendung 10 identifizierenden Kennung, sowie einem Thema, zu dem die Nachricht N1 veröffentlicht wird. Dabei kann ein entsprechendes Thema auch als "Topic" oder auch "Subject" bezeichnet werden. Darüber hinaus können die Adressinformationen optional Informationen zu Eigenschaften der Nachricht N1 umfassen. Entsprechende Eigenschaften können beispielsweise die Wichtigkeit (Priorität) oder Safety-Eigenschaften der Nachricht N1 beschreiben. Vorzugsweise umfasst die von der sendeseitigen Anwendung 10 veröffentlichte Nachricht N1 sowohl das Thema als auch die die sendeseitige Anwendung 10 identifizierende Kennung jeweils in Form einer innerhalb des Bahnautomatisierungsnetzes 100 eineindeutigen Identität.

Im Rahmen des beschriebenen Beispiels sei angenommen, dass die Nachricht N1 das Thema "Statusdaten", d.h. Statusinformationen, beispielsweise eines Radsensors oder eines Weichantriebes, betrifft und die empfangsseitige Anwendung 21 Nachrichten zu diesem Thema empfangen möchte (etwa um diese beispielsweise stellwerksseitig in Bezug auf den Status des jeweiligen Feldelementes auszuwerten). Hierzu abonniert ("subscribe") die empfangsseitige Anwendung 21 alle Nachrichten zu dem Thema "Statusdaten".

Entsprechend der Darstellung der Figur 1 kommunizieren die sendeseitige Anwendung 10 sowie die empfangsseitige Anwendung 21 nicht direkt miteinander, sondern sind jeweils über eine Schnittstelle mit dem sendeseitigen Nachrichtenbroker 30 beziehungsweise dem empfangsseitigen Nachrichtenbroker 40 verbunden. Zur Vermeidung von Missverständnissen sei darauf hingewiesen, dass es sich bei der schematischen Darstellung der Figur 1 um eine vereinfachte, schematische Darstellung eines simplen Beispiels handelt. Dies bedeutet insbesondere, dass das Bahnautomatisierungsnetz 100 in der Regel eine größere Anzahl sowohl sendeseitiger als empfangsseitiger Anwendungen aufweisen wird. Gleiches gilt in Bezug auf die Anzahl der sendeseitigen und empfangsseitigen Nachrichtenbroker. Dabei können sowohl die Anwendungen als auch die Nachrichtenbroker örtlich verteilt angeordnet sein. Zu jedem Thema kann es beliebig viele sendeseitige Anwendungen und beliebig viele Abonnenten, d.h. empfangsseitige Anwendungen, geben.

Die sendeseitige Anwendung 10 kann nun zu einem beliebigen Zeitpunkt die Nachricht N1 an den sendeseitigen Nachrichtenbroker 30 schicken. Der sendeseitige Nachrichtenbroker 30 interpretiert die von ihm empfangene Nachricht N1 dabei dahingehend, dass er die von der sendeseitigen Anwendung 10 veröffentlichte Nachricht N1 anhand des in der Nachricht N1 angegebenen Themas auf zumindest zwei redundante, zumindest teilweise physikalisch unabhängigen Netzpfade 50, 51 des Bahnautomatisierungsnetzes 100 abbildet. Die entsprechenden redundanten Netzpfade 50, 51, die vorzugsweise weitgehend oder vollständig physikalisch unabhängig voneinander sind, sind in Figur 1 durch entsprechende "Wolken" angedeutet. Hierdurch soll zum Ausdruck gebracht werden, dass die konkrete Ausprägung der redundanten Netzpfade 50, 51 als solche für die weitere Beschreibung unerheblich ist.

Das Bahnautomatisierungsnetz 100 ist nun weiterhin eingerichtet, die Nachricht N1 simultan über die zumindest zwei Netzpfade 50, 51 an den empfangsseitigen Nachrichtenbroker 40 zu übermitteln. Dies bedeutet, dass die Nachricht N1 sowohl über den Netzpfad 50 als auch über den Netzpfad 51 von dem sendeseitigen Nachrichtenbroker 30 an dem empfangsseitigen Nachrichtenbroker 40 übermittelt wird. Die entsprechenden Nachrichten beziehungsweise Nachrichtenkopien sind in Figur 1 zwecks Unterscheidung mit den Bezugszeichen N1' beziehungsweise N1" gekennzeichnet. Dabei versieht der sendeseitige Nachrichtenbroker 30 die Nachricht N1 beziehungsweise die versendeten Nachrichten N1' und N1" mit einer zusätzlichen eindeutigen Sequenznummer, die mit den Nachrichtenkopien N1' und N1" über die Netzpfade 50, 51, die unterschiedliche Netze oder Teilnetze umfassen können, an den empfangsseitigen Nachrichtenbroker 40 übermittelt wird. Dieser leitet von den empfangenen Nachrichten N1' und N1" mit gleicher Sequenznummer und gleichem Inhalt nur die zuerst empfangene Nachricht an die empfangsseitige Anwendung 21 weiter. Im Rahmen des beschriebenen Ausführungsbeispiels soll es sich hierbei um die Nachricht N1" handeln.

Entsprechend den vorstehenden Erläuterungen wird seitens beziehungsweise mittels der Nachrichtenbroker 30 und 40 sowie der unabhängigen Netzpfade 50, 51 eine netzseitige Redundanz erzielt. Dabei ist wesentlich, dass die Nachricht N1 in Form der Nachrichtenkopien N1' und N1" simultan, d.h. gleichzeitig, über die Netzpfade 50 und 51 übermittelt beziehungsweise übertragen wird. Hierdurch wird auch im Falle möglicher Störungen oder Ausfälle eine zuverlässige Übertragung der Nachricht N1 ohne Zeitverzögerung ermöglicht. Damit wird insbesondere auch die Notwendigkeit einer späteren Wiederholung der Übermittlung der Nachricht aufgrund eines Verlusts derselben vermieden. Die Verwendung eines Publish/Subscribe-Systems bietet weiterhin den Vorteil, dass das Bahnautomatisierungsnetz 100 nahezu beliebig um weitere Anwendungen und/oder weitere Nachrichtenbroker erweiterbar ist, so dass entsprechende Änderungen flexibel realisierbar sind.

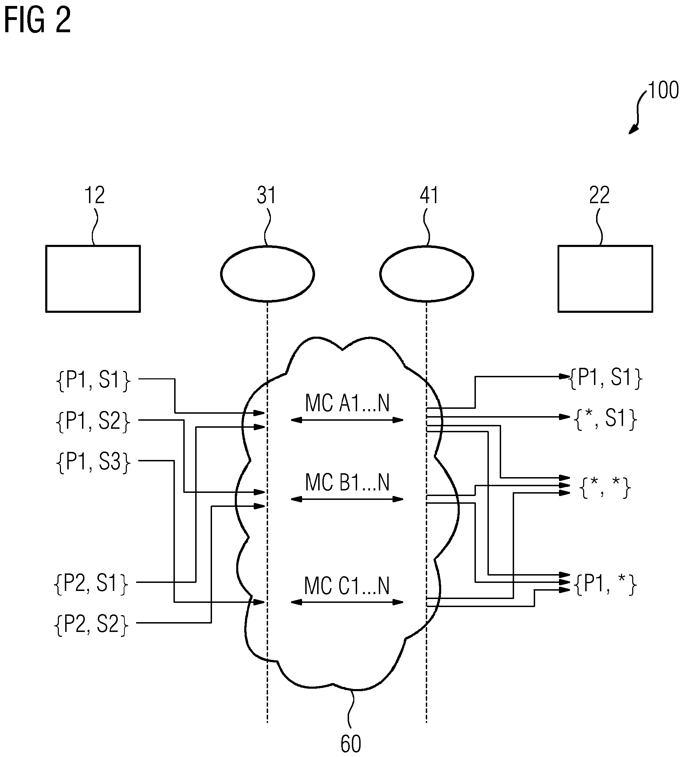

Figur 2 zeigt in einer schematischen Skizze ein erstes Ausführungsbeispiel des erfindungsgemäßen Bahnautomatisierungsnetzes. Dabei unterscheidet sich die Darstellungsart der Figur 2 von derjenigen der Figur 1. Auf der linken Seite der Figur 2 ist hierbei eine sendeseitige Anwendung 12 beziehungsweise mehrere sendeseitige Anwendungen 12 angedeutet. Diese ist beziehungsweise sind mit einem sendeseitigen Nachrichtenbroker 31 verbunden, der wiederum über ein Kommunikationsnetz 60 mit redundanten Netzpfaden mit einem empfangsseitigen Nachrichtenbroker 41 kommunikationstechnisch verbunden ist. An den empfangsseitigen Nachrichtenbroker 41 des Bahnautomatisierungsnetzes 100 ist wiederum eine empfangsseitige Anwendung 22 beziehungsweise sind mehrere entsprechende empfangsseitige Anwendungen angebunden.

Auf Seiten der sendeseitigen Anwendung 12 sind in der Darstellung der Figur 2 nun unterschiedliche Nachrichten durch geschweifte Klammern gekennzeichnet. Dabei bezeichnet P1 beziehungsweise P2 den jeweiligen "Publisher", d.h. die jeweilige sendeseitige Anwendung 12. Mit S1, S2 beziehungsweise S3 ist das jeweilige Thema beziehungsweise "Subject" der betreffenden Nachricht gekennzeichnet.

Im Rahmen des beschriebenen Ausführungsbeispiels sei angenommen, dass das Bahnautomatisierungsnetz 100 eingerichtet ist, die jeweiligen Nachrichten simultan an mehrere empfangsseitige Nachrichtenbroker 41 zu übermitteln, die jeweils zumindest zwei Multicast-Gruppen zugeordnet sind, wobei jede der Multicast-Gruppen einen der redundanten, zumindest teilweise physikalisch unabhängigen Netzpfade des Bahnautomatisierungsnetzes 100 verwendet. Die jeweiligen Multicast-Gruppen sind in der Figur 2 durch die Bezeichnung MC A1..N, MC B1..N und MC C1..N angedeutet. Dabei bedeutet beispielsweise MC A1, dass es sich um die Multicast-Gruppe zum Thema S1 über den ersten der redundanten Netzpfade handelt. Im Falle von zwei entsprechenden redundanten Netzpfaden wäre N somit 2, d.h. MC A2 würde in diesem Fall die Multicast-Gruppe zum Thema S1 bezogen auf den zweiten Netzpfad bezeichnen. In analoger Weise sind auch bezüglich der Themen S2 und S3 entsprechende Multicast-Gruppen MC B1, MC B2, MC C1, MC C2 vorgesehen. Mittels der entsprechenden Multicast-Gruppen MC A1, MC A2, MC B1, MC B2, MC C1, MC C2 wird hierbei auch im Falle mehrerer empfangsseitiger Nachrichtenbroker eine simultane und effiziente Übermittlung der jeweiligen Nachricht über die redundanten, zumindest teilweise physikalisch unabhängigen Netzpfade des Kommunikationsnetzes 60 des Bahnautomatisierungsnetzes 100 gewährleistet beziehungsweise realisiert. Dabei ist jeder der Multicast-Gruppen eine entsprechende Multicast-Adresse zugeordnet. Nachrichten, die von unterschiedlichen sendeseitigen Anwendungen 12 beziehungsweise "Publisher" zum gleichen Thema veröffentlicht werden, werden vorzugsweise jeweils mit dem gleichen Multicast gesendet, d.h. unter Verwendung der gleichen Multicast-Gruppen. Dies bedeutet, dass - wie bereits erwähnt - die Multicast-Gruppen MC A1, MC A2, MC B1, MC B2, MC C1, MC C2 jeweils dem Thema der Nachrichten zugeordnet sind.

Der empfangsseitige Nachrichtenbroker 41 filtert eingehende Nachrichten entsprechend den ihm vorliegenden Subskriptionen beziehungsweise Abonnements oder Registrierungen der empfangsseitigen Anwendung(en) 22 beziehungsweise P1/P2. Im Rahmen des beschriebenen Ausführungsbeispiels stehen hierbei als Selektionskriterien das jeweilige Thema sowie eine die jeweilige sendeseitige Anwendung kennzeichnende Identität zur Verfügung. Mittels dieser Selektions- beziehungsweise Filterkriterien können die empfangsseitigen Anwendungen 22 somit auswählen, welche Nachrichten sie empfangen möchten. So ist es beispielsweise denkbar, dass eine empfangsseitige Anwendung (d.h. ein Abonnent) alle Nachrichten von einer oder mehreren sendeseitigen Anwendung(en) empfangen möchte. Anderseits mag es eine andere sendeseitige Anwendung geben, die (nur) alle Nachrichten zu einem bestimmten Thema empfangen möchten. Sofern darüber hinaus auch - abweichend von der Darstellung der Figur 2 - ein Nachrichtentyp als Selektionskriterium verfügbar ist, könnte mittels des Nachrichtentyps eine Auswahl dahingehend vorgenommen werden, dass beispielsweise alle "Log"-Nachrichten, alle glaubwürdigen ("credible"), d.h. signaltechnisch sicheren Nachrichten, alle signaltechnisch nicht sicheren Nachrichten und/oder alle Steuernachrichten abonniert und in Folge empfangen werden. Vorteilhafterweise besteht hierbei die Möglichkeit, bei der Selektion "Wildcardwerte" zu verwenden, so dass beispielsweise Nachrichten zu einem bestimmten Thema von beliebigen sendeseitigen Anwendungen abonniert und in der Folge empfangen werden können.

Als eine Folge des zuvor beschriebenen "Abonnementwesens", durch das auch nur ein Teil der Nachrichten einer sendeseitigen Anwendung abonniert werden kann, werden die Nachrichten von der jeweiligen sendeseitigen Anwendung vorzugsweise mit Sequenznummern versehen, die für die jeweilige sendeseitige Anwendung und das jeweilige Thema (sowie gegebenenfalls auch den jeweiligen Nachrichtentyp) spezifisch sind. Hierdurch ist es für die jeweilige empfangsseitige Anwendung vorzugsweise möglich, einen Verlust einer Nachricht anhand der in den empfangenen Nachrichten enthaltenen Sequenznummern zu erkennen.

In dem in Figur 2 dargestellten Ausführungsbeispiel veröffentlicht die sendeseitige Anwendung 12 beziehungsweise genauer die sendeseitige Anwendung P1 von oben nach unten Nachrichten zu den Themen S1, S2 und S3. In entsprechender Weise veröffentlicht die sendeseitige Anwendung P2 Nachrichten zu den Themen S1 und S2. Die entsprechenden Nachrichten werden in der zuvor beschriebenen Weise über das Kommunikationsnetz 60 an den empfangsseitigen Nachrichtenbroker 41 beziehungsweise eine Mehrzahl entsprechender empfangsseitiger Nachrichtenbroker übertragen. Der empfangsseitige Nachrichtenbroker 41 verteilt eingehende Nachrichten an alle empfangsseitigen Anwendungen 22 beziehungsweise Abonnenten, die bei ihm registriert sind.

Auf der rechten Seite der Figur 2 ist unter dem die empfangsseitige Anwendung 22 beziehungsweise generell die Empfangsseite kennzeichnenden Block 22 an oberster Stelle - ebenfalls in geschweiften Klammern - ein von der betreffenden empfangsseitigen Anwendung bei der jeweiligen Registrierung beziehungsweise beim jeweiligen "subscribe" angegebenes Muster "{P1,S1}" dargestellt. Dies bedeutet, dass die betreffende empfangsseitige Anwendung alle Nachrichten von der sendeseitigen Anwendung P1 zum Thema S1 empfangen möchte. Dementsprechend leitet der empfangsseitige Nachrichtenbroker 41 alle entsprechenden Nachrichten an die betreffende empfangsseitige Anwendung weiter.

Darunter, d.h. in der zweiten Zeile, ist ein Fall gezeigt, bei dem eine empfangsseitige Anwendung sich mittels einer "Wildcard" mittels des Musters beziehungsweise Filters "{*,S1}" für Nachrichten zum Thema S1 von beliebigen sendeseitigen Anwendungen registriert hat. Dementsprechend leitet der empfangsseitige Nachrichtenbroker 41 alle Nachrichten zum Thema S1 an die betreffende empfangsseitige Anwendung weiter. Es sei darauf hingewiesen, dass vorzugsweise auch bei anderen Suchen, etwa in Bezug auf optionale Parameter wie einen Nachrichtentyp oder eine Ortsinformation, Wildcards derart unterstützt werden, dass ein fehlendes oder zu Null gesetztes Feld als passend interpretiert wird.

In der dritten Zeile auf der Empfangsseite ist ein Fall gezeigt, in dem eine empfangsseitige Anwendung mittels des Musters "{*,*}" sowohl bezüglich der jeweiligen sendeseitigen Anwendung als auch in Bezug auf das jeweilige Thema eine "Wildcard" beim Subskribieren beziehungsweise bei der Registrierung verwendet hat. Dies hat zur Folge, dass seitens des empfangsseitigen Nachrichtenbrokers 41 alle Nachrichten an die betreffende empfangsseitige Anwendung weitergeleitet werden. In der Praxis wird es sich hierbei regelmäßig um einen Ausnahmefall handeln. Dieser kann beispielsweise dann auftreten, wenn es sich bei der betreffenden empfangsseitigen Anwendung beziehungsweise Komponente um eine solche handelt, die speziell zur Aufzeichnung sowie gegebenenfalls Diagnose des gesamten innerhalb des Bahnautomatisierungsnetzes 100 übertragenen Nachrichtenverkehrs vorgesehen ist.

In der letzten Zeile ist auf der Empfangsseite der Fall dargestellt, dass eine empfangsseitige Anwendung mittels des beim Subskribieren verwendeten Musters "{P1,*}" alle Nachrichten, d.h. ohne thematische Einschränkung, von der sendeseitigen Anwendung P1 empfangen möchte. Dementsprechend leitet der empfangsseitige Nachrichtenbroker in diesem Fall alle Nachrichten der sendeseitigen Anwendung P1 an die entsprechende empfangsseitige Anwendung weiter.

Gemäß den vorsehenden Erläuterungen im Zusammenhang mit Figur 2 kann mittels des Publish/Subscribe-Systems des Bahnautomatisierungsnetzes 100 eine flexible Übermittlung von Nachrichten zwischen sendeseitigen und empfangsseitigen Anwendungen erfolgen. Hierfür ist es vorteilhafterweise nicht erforderlich, dass sich die Anwendungen untereinander kennen oder direkt miteinander kommunizieren.

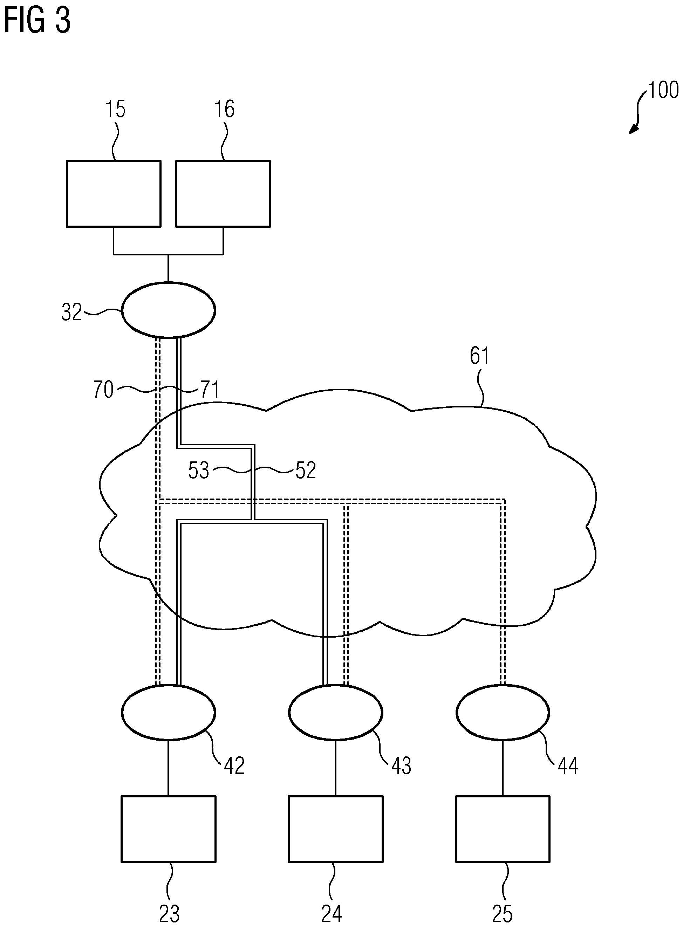

Figur 3 zeigt in einer schematischen Skizze ein zweites Ausführungsbeispiel des erfindungsgemäßen Bahnautomatisierungsnetzes. Dabei ist im Vergleich zu den Figuren 1 und 2 wiederum eine andere Art der Darstellung des Bahnautomatisierungsnetzes 100 gewählt. Gezeigt sind hierbei sendeseitige Anwendungen 15, 16, die kommunikationstechnisch an einen sendeseitigen Nachrichtenbroker 22 angebunden sind. Darüber hinaus sind empfangsseitige Anwendungen 23, 24, 25 erkennbar, die jeweils kommunikationstechnisch an einen empfangsseitigen Nachrichtenbroker 42, 43 beziehungsweise 44 angebunden sind. Mit dem Bezugszeichen 61 ist wiederum ein Kommunikationsnetz 61 angedeutet, das redundante Netzpfade 52, 53 bereitstellt. Aus Gründen der Übersichtlichkeit sind die redundanten Netzpfade 52, 53 hierbei lediglich durch eine entsprechende Doppellinie dargestellt, ohne die zumindest teilweise physikalische Unabhängigkeit der Netzpfade 52, 53 genauer zu zeigen.

Im Rahmen des beschriebenen Ausführungsbeispiels sei angenommen, dass es sich bei den sendeseitigen Anwendungen 15, 16 um solche handelt, welche die gleichen Nachrichten veröffentlichen, d.h. Nachrichten mit identischen Themen und Inhalten. Dies bedeutet, dass mittels der sendeseitigen Anwendungen 15, 16 auf der Anwendungsebene eine Redundanz realisiert wird. Seitens der empfangsseitigen Anwendungen 23, 24, 25 sei angenommen, dass die empfangsseitigen Anwendungen 23 und 24 Nachrichten zu dem von den sendeseitigen Anwendungen 15, 16 veröffentlichten Nachrichten abonniert beziehungsweise subskribiert haben. Dementsprechend sind die empfangsseitigen Nachrichtenbroker 42 und 43, an welche die empfangsseitigen Anwendungen 23 und 24 angebunden sind, sowie der sendeseitige Nachrichtenbroker 32 gemeinsam einer Multicast-Gruppe zugeordnet. Hierdurch wird es vorteilhafterweise ermöglicht, Nachrichten zu dem betreffenden Thema simultan an beide empfangsseitigen Nachrichtenbroker 42 und 43 zu übermitteln. Zwecks redundanter Übermittlung über zumindest teilweise physikalisch unabhängige Netzpfade sind hierbei zwei Multicast-Gruppen vorgesehen, wobei jede der beiden Multicast-Gruppen einen der redundanten Netzpfade des Bahnautomatisierungsnetzes 100 verwendet.

Da die empfangsseitige Anwendung 25 keine Nachrichten der sendeseitigen Anwendungen 15, 16 beziehungsweise zu dem von diesen veröffentlichten Thema abonniert hat, ist der empfangsseitige Nachrichtenbroker 44 auch nicht Bestandteil beziehungsweise Mitglied der jeweiligen Multicast-Gruppen und empfängt somit auch keine Nachrichten zu dem betreffenden Thema.

Entsprechend der Darstellung der Figur 3 sind die Nachrichtenbroker 32, 42, 43 und 44 darüber hinaus über redundante Netzpfade 70, 71 zum Austausch von Verwaltungsdaten kommunikationstechnisch miteinander beziehungsweise untereinander verbunden. Zu diesem Zwecke werden vorkonfigurierte Multicast-Gruppen verwendet, die jeweils wiederum zumindest teilweise physikalisch unabhängige Netzpfade des Bahnautomatisierungsnetzes 100 simultan verwenden. Über die redundanten Netzpfade 70, 71 beziehungsweise unter Verwendung der vorkonfigurierten Multicast-Gruppen tauschen die Nachrichtenbroker 32, 42, 43 und 44 untereinander Verwaltungsdaten beziehungsweise Signalisierungsnachrichten aus. Mittels entsprechender Multicasts können hierbei Suchen ("Discovery") oder Statusnachrichten zwischen den Nachrichtenbrokern 32, 42, 43 und 44 übertragen werden. Dabei ist zu beachten, dass vorzugsweise keine zentrale Einheit existiert, die das Netz der Nachrichtenbroker 32, 42, 43, 44 steuert. Dies bedeutet, dass das Weiterleiten von Nachrichten der Anwendungen 15, 16 sowie das Auflösen von Fehlerfällen dezentral von den Nachrichtenbrokern 32, 42, 43 und 44 selbst durchgeführt wird. Die Anwendungen 15, 16, 23, 24, 25 sind hiervon entkoppelt. Vorzugsweise handelt es sich weiterhin bei einem Nachrichtenbroker um einen eigenständig laufenden Prozess und keine Software-Bibliothek.

Falls nun beispielsweise die bei dem empfangsseitigen Nachrichtenbroker 44 angemeldete empfangsseitige Anwendung 25 eine "Subscribe"-Nachricht an den empfangsseitigen Nachrichtenbroker 44 schickt, etwa zu dem Thema, zu dem die sendeseitigen Anwendungen 15, 16 Nachrichten veröffentlichen, so ermittelt der empfangsseitige Nachrichtenbroker 44 aus welcher Multicast-Gruppe die entsprechenden Nachrichten empfangen werden können. Dies kann entweder über eine entsprechende Vorkonfiguration, über eine zentrale Datenbank oder über eine entsprechende Anfrage, ob sie passende "Publisher" beziehungsweise sendeseitige Anwendungen 15, 16 haben und wie die von der jeweiligen Multicast-Gruppe verwendete Multicast-Adresse ist, bei den anderen Nachrichtenbrokern 32, 42, 43 des Bahnautomatisierungsnetzes 100 erfolgen. Für die entsprechende Kommunikation wird der "Discovery Channel" in Form der redundanten Netzpfade 70, 71 zum Austausch von Verwaltungsdaten verwendet. Bei einer erfolgreichen Suche entsprechender Multicast-Gruppen abonniert der empfangsseitige Nachrichtenbroker 44 diese beziehungsweise tritt diesen bei ("join"). Hieraufhin leitet der empfangsseitige Nachrichtenbroker 44 alle über die betreffende(n) Multicast-Gruppe(n) empfangenen Nachrichten an die empfangsseitige Anwendung 25 weiter.

Die Kommunikation der sendeseitigen und anwendungsseitigen Anwendungen 15, 16, 23, 24, 25 mit dem jeweiligen sendeseitigen oder empfangsseitigen Nachrichtenbroker 32, 42, 43, 44 kann nachrichtenbasiert beispielsweise über gängige Methoden wie TCP (Transmission Control Protocol) erfolgen. Dabei ist die jeweilige Anwendung 15, 16, 23, 24, 25 vorteilhafterweise komplett von der Übertragung im Kommunikationsnetz des Bahnautomatisierungsnetzes 100 entkoppelt. Gleichzeitig kann die Nachrichtenadressierung mittels der Nachrichtenbroker 32, 42, 43, 44 vorteilhafterweise komplett anders und transparent für die jeweilige Anwendung 15, 16, 23, 24, 25 umgesetzt werden. Dies bedeutet, dass durch die Nachrichtenbroker 32, 42, 43, 44 ein Bruch beziehungsweise eine Entkopplung im Kommunikationsverhalten zwischen dem jeweiligen Kommunikationsnetz und den Anwendungen 15, 16, 23, 24, 25 einerseits und den Nachrichtenbrokern 32, 42, 43, 44 untereinander andererseits erzeugt wird. Mit anderen Worten implementieren die Nachrichtenbroker 32, 42, 43, 44 eine netzunabhängige Zugangsschicht, welche von der Internet-Technologie abstrahiert. Die Anwendungen 15, 16, 23, 24, 25 verwenden ein eigenes Adressierungsschema, welches ein Publish/Subscribe-Muster darstellt. Dieses basiert vorzugsweise nicht auf Internet-Adressen. Die Abbildung des Publish/Subscribe-Verhaltens auf Internet-Protokolle erfolgt vorteilhafterweise durch die Nachrichtenbroker 32, 42, 43, 44.

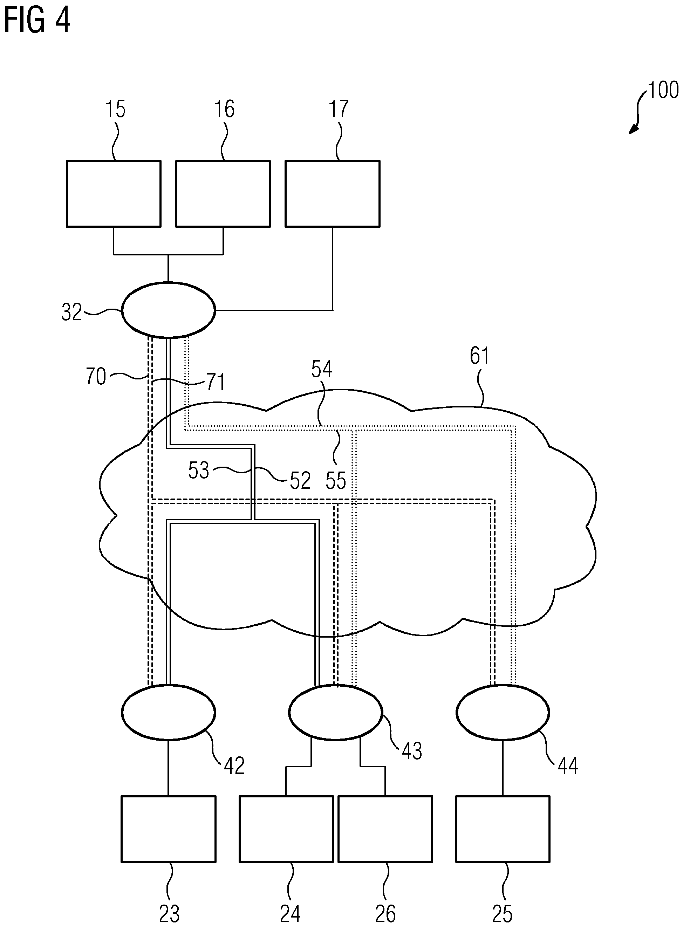

Figur 4 zeigt in einer schematischen Skizze ein drittes Ausführungsbeispiel des erfindungsgemäßen Bahnautomatisierungsnetzes. Dabei zeigt die Figur 4 im Vergleich zu Figur 3 ein um weitere Komponenten ergänztes Bahnautomatisierungsnetz 100. So ist einerseits zusätzlich eine weitere sendeseitige Anwendung 17 dargestellt, die Nachrichten zu einem anderen beziehungsweise weiteren Thema (z.B. zu einer einheitlichen Uhrzeit des Bahnautomatisierungsnetzes 100) veröffentlicht. Darüber hinaus ist an den empfangsseitigen Nachrichtenbroker 43 eine weitere empfangsseitige Anwendung 26 kommunikationstechnisch angebunden, die ebenso wie die empfangsseitige Anwendung 25 Nachrichten zu dem weiteren Thema, zu dem die sendeseitige Anwendung 17 Nachrichten veröffentlicht, subskribiert beziehungsweise abonniert hat. Dadurch, dass nun ein weiteres Thema berücksichtigt wird, entstehen im Unterschied zu Figur 3 nunmehr zwei Nachrichtenflüsse. Dabei entspricht jeder Nachrichtenfluss für jeden der redundanten Netzpfade 52, 53, 54, 55 jeweils einer Multicast-Gruppe beziehungsweise einer entsprechenden Multicast-Adresse. In entsprechender Weise könnten nun beliebig viele weitere Multicast-Gruppen (bei entsprechenden weiteren Themen) hinzugefügt beziehungsweise berücksichtigt werden.

An dieser Stelle sei vorsorglich darauf hingewiesen, dass anstelle oder neben einer Verwendung von Multicast eine Übermittlung von Nachrichten im Rahmen des erfindungsgemäßen Bahnautomatisierungsnetzes 100 selbstverständlich grundsätzlich auch mittels Unicast möglich ist. Dabei wird in der Regel jeweils die Vorgehensweise gewählt werden, die im jeweiligen Einzelfall am günstigsten ist. Dies kann beispielsweise so aussehen, dass sobald mehrere empfangsseitige Nachrichtenbroker Nachrichten zu einem Thema benötigen, eine entsprechende Multicast-Gruppe eingerichtet wird.

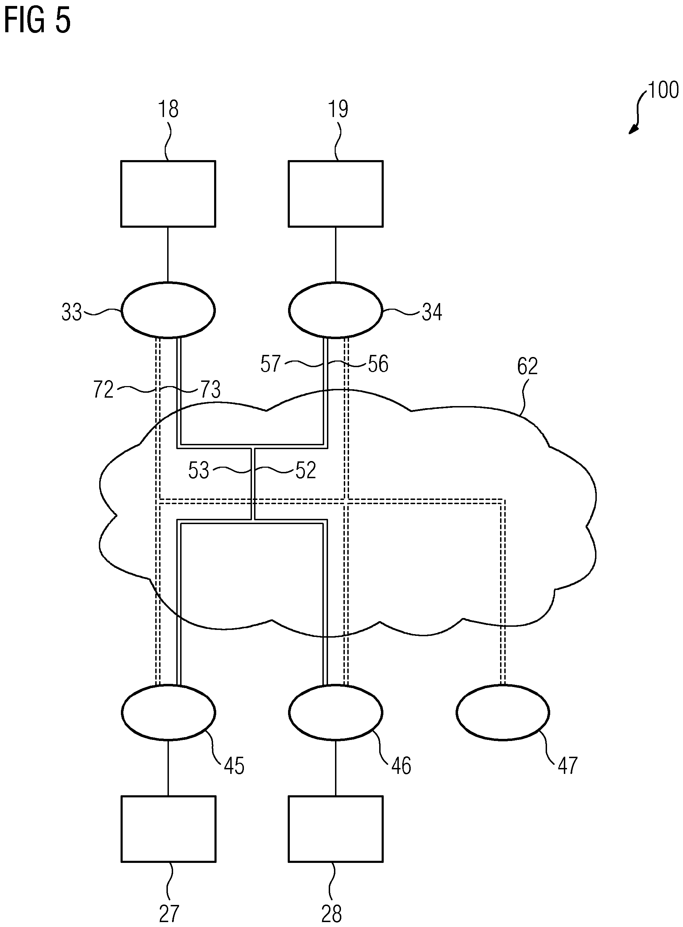

Figur 5 zeigt in einer schematischen Skizze ein viertes Ausführungsbeispiel des erfindungsgemäßen Bahnautomatisierungsnetzes. Im Unterschied zu den Ausführungsbeispielen der Figuren 3 und 4 sind bei dem Ausführungsbeispiel gemäß Figur 5 zwei sendeseitige Anwendungen 18, 19 an unterschiedliche sendeseitige Nachrichtenbroker 33, 34 im Netz angeschlossen. Dabei können die sendeseitige Anwendung 18 und der sendeseitige Nachrichtenbroker 33 beispielsweise an einem Ort und die sendeseitige Anwendung 19 und der sendeseitige Nachrichtenbroker 34 beispielsweise an einem anderen Ort angeordnet sein.

In dem Ausführungsbeispiel der Figur 5 sind zwei empfangsseitige Anwendungen 27 und 28 gezeigt, die beide das Thema der sendeseitigen Anwendungen 18 und 19 subskribiert haben, d.h. alle entsprechenden Nachrichten zu diesem Thema erhalten. Dabei ist die empfangsseitige Anwendung 27 an einen empfangsseitigen Nachrichtenbroker 45 und die empfangsseitige Anwendung 28 an einen empfangsseitigen Nachrichtenbroker 46 kommunikationstechnisch angebunden. Darüber hinaus ist ein empfangsseitiger Nachrichtenbroker 47 erkennbar, an den keine empfangsseitige Anwendung kommunikationstechnisch angebunden ist. Nichtsdestotrotz ist auch der empfangsseitige Nachrichtenbroker 47 mittels redundanter Kommunikationsverbindung 72, 73 zum Austausch von Verwaltungsdaten mit den übrigen Nachrichtenbrokern 33, 34, 45 und 46 des Bahnautomatisierungsnetzes 100 verbunden.

Darüber hinaus ist in Figur 5 erkennbar, dass entsprechend der Darstellung in den Figuren 3 und 4 die sendeseitigen Nachrichtenbroker 33 und 34 sowie die empfangsseitigen Nachrichtenbroker 45 und 46 jeweils zwei Multicast-Gruppen zugeordnet sind, wobei jede der Multicast-Gruppen wiederum einen redundanten zumindest teilweise physikalisch unabhängigen Netzpfad 56, 57 des Bahnautomatisierungsnetzes 100 verwendet.

Unabhängig von den jeweiligen zuvor beschriebenen Ausführungsbeispielen des Bahnautomatisierungsnetzes ist der jeweilige empfangsseitige Nachrichtenbroker vorzugsweise eingerichtet, aufgrund der redundanten Übermittlung der Nachrichten oder aufgrund redundanter sendeseitiger Anwendungen empfangene Duplikate der Nachricht zu verwerfen. Innerhalb des Bahnautomatisierungsnetzes 100 wird vorzugsweise ein hochskalierendes und echtzeitfähiges verbindungsloses Protokoll, insbesondere das User Datagram Protocol (UDP), als Transportprotokoll zur Übermittlung der jeweiligen Nachrichten verwendet.

Durch eine mehrfache zeitversetzte Übermittlung von Nachrichten über jeden der zumindest teilweise physikalisch unabhängigen Netzpfade kann vorteilhafterweise die Robustheit gegenüber temporären Störungen des seitens des Bahnautomatisierungsnetzes verwendeten Kommunikationsnetzes beziehungsweise der verwendeten Kommunikationsnetze weiter erhöht werden. Damit besteht somit die Möglichkeit, neben einer Netzredundanz auch eine Leitungsredundanz zu realisieren. Darüber hinaus kann in Abhängigkeit von den jeweiligen Anforderungen und Umständen vorteilhafterweise auch auf der Anwendungsebene ohne Mehraufwand und ohne örtliche Einschränkungen, d.h. unter Einbeziehung beliebiger Orte, sowie ohne erforderliche Kommunikationsumschaltung Redundanz realisiert werden. Hierbei ist zu berücksichtigen, dass durch die Vermittlung mittels der Nachrichtenbroker hardwareunabhängige Anwendungen vorteilhafterweise dahingehend ortsunabhängig sind, dass sendeseitige und empfangsseitige Anwendungen, d.h. Sender und Empfänger einer jeweiligen Nachricht, vorzugsweise derart voneinander entkoppelt sind, dass der Ort der einzelnen Teilnehmer vollständig beliebig ist und damit auch dynamisch geändert werden kann. Dabei wirken sich Änderungen im Kommunikationsnetzwerk vorteilhafterweise nicht auf die Kommunikation der Anwendungen innerhalb der Anwendungen selber aus, da die Anwendungen vorzugsweise ihren eigenen Adressierungsraum unabhängig von Netzwerk aufweisen. Hierzu ist es lediglich erforderlich, dass sich die Anwendungen jeweils eineindeutig benennen beziehungsweise identifizieren.

Die bei der Bahnautomatisierung nötige funktionale Sicherheit kann durch den Aufbau der Nachrichten von Anwendung zu Anwendung hergestellt werden, in welchem Fall den Nachrichtenbrokern keine Sicherheitsrelevanz zukommt. Hierzu können die vermittelten Nachrichten beispielsweise von der jeweiligen empfangsseitigen Anwendung überprüfbare Informationen zur Glaubwürdigkeit und zum Erzeuger der jeweiligen Nachricht enthalten. Im Ergebnis können die Nachrichten damit - wie vorstehend anhand der Ausführungsbeispiele beschrieben - durch die Nachrichtenbroker vermittelt werden, ohne dass zwischen der jeweiligen sendeseitigen Anwendung und der jeweiligen empfangsseitigen Anwendung eine geschützte und überwachte "Peer to Peer"-Beziehung erforderlich ist.

Durch den jeweiligen Nachrichtenbroker kann eine sendeseitige Anwendung eine Nachricht veröffentlichen und macht dabei keine Annahme über die jeweiligen Empfänger, d.h. empfangsseitigen Anwendungen. Diese können durch Filterregeln an dem jeweiligen empfangsseitigen Nachrichtenbroker für sie relevante beziehungsweise erforderliche Nachrichten abonnieren. Für die Bahnautomatisierung mit ihren hohen Anforderungen bezügliche "Safety" beziehungsweise signaltechnische Sicherheit ergibt sich hierbei insbesondere der Vorteil, dass sich eine entsprechende Zertifizierung ausschließlich auf die Anwendungen erstrecken muss, nicht jedoch auf die Nachrichtenbroker. Dabei erlaubt das anhand der vorstehenden Ausführungsbeispiele beschriebene Bahnautomatisierungsnetz beziehungsweise -system vorteilhafterweise eine Verwendung einer Vielzahl von Nachrichtenbrokern. So kann beispielsweise je an das Bahnautomatisierungsnetz angeschlossenem Rechner ein Nachrichtenbroker vorgesehen werden, wodurch sich die Verfügbarkeit des Gesamtsystems bei Ausfall eines Nachrichtenbrokers erhöht. Dies ist insbesondere deshalb von Bedeutung, da die Verfügbarkeit der Kommunikation vorwiegend durch die Nachrichtenbroker beziehungsweise das durch diese gebildete "Bokernetzwerk" bestimmt wird. Dadurch, dass die funktionale Sicherheit in den Anwendungen komplett von den Nachrichtenbrokern beziehungsweise der Verfügbarkeit der Kommunikation getrennt werden kann, können sich für das Gesamtsystem, d.h. das Bahnautomatisierungsnetz als Ganzes, vorteilhafterweise probabilistische Vorteile ergeben.

Entsprechend den Ausführungen im Zusammenhang mit den zuvor beschriebenen Ausführungsbeispielen weisen das erfindungsgemäße Bahnautomatisierungsnetz sowie das erfindungsgemäße Verfahren zum Übermitteln von Nachrichten in einem solchen Bahnautomatisierungsnetz somit erhebliche Vorteile insbesondere in Bezug auf die ermöglichte Flexibilität und Skalierbarkeit auf. Dabei werden die speziellen Anforderungen der Bahnautomatisierung insbesondere dadurch berücksichtigt, dass Nachrichten simultan über zumindest zwei redundante, zumindest teilweise physikalisch unabhängige Netzpfade übertragen werden.

## Patentansprüche

1. Bahnautomatisierungsnetz (100),
- wobei das Bahnautomatisierungsnetz (100) ein Publish/Subscribe-System aufweist mit
- zumindest einer zum Veröffentlichen von Nachrichten eingerichteten sendeseitigen Anwendung (10, 11),
- zumindest einem sendeseitigen Nachrichtenbroker (30),
- zumindest einem empfangsseitigen Nachrichtenbroker (40) sowie
- zumindest einer zum Empfangen von Nachrichten eingerichteten empfangsseitigen Anwendung (21),
- wobei jede sendeseitige Anwendung (10, 11) kommunikationstechnisch an den sendeseitigen Nachrichtenbroker (30) oder einen der sendeseitigen Nachrichtenbroker angebunden ist,
- wobei der zumindest eine sendeseitige Nachrichtenbroker (30) eingerichtet ist, eine von der sendeseitigen Anwendung oder einer (z.B. 10) der sendeseitigen Anwendungen (10, 11) veröffentlichte Nachricht (N1) anhand eines in der Nachricht (N1) angegebenen Themas auf zumindest zwei redundante, zumindest teilweise physikalisch unabhängige Netzpfade (50, 51) des Bahnautomatisierungsnetzes (100) abzubilden,
- wobei das Bahnautomatisierungsnetz (100) eingerichtet ist, die Nachricht (N1) simultan über die zumindest zwei Netzpfade (50, 51) an den empfangsseitigen Nachrichtenbroker (40) oder zumindest einen der empfangsseitigen Nachrichtenbroker zu übermitteln,
- wobei jede empfangsseitige Anwendung (21) kommunikationstechnisch an den empfangsseitigen Nachrichtenbroker (40) oder einen der empfangsseitigen Nachrichtenbroker angebunden ist und
- wobei der empfangsseitige Nachrichtenbroker (40) eingerichtet ist, die Nachricht (N1) an die zumindest eine empfangsseitige Anwendung (21) zu übermitteln, wobei das Bahnautomatisierungsnetz (100) eingerichtet ist, die Nachricht (N1) simultan an mehrere empfangsseitige Nachrichtenbroker zu übermitteln, die jeweils zumindest zwei Multicast-Gruppen zugeordnet sind, wobei jede der Multicast-Gruppen einen der redundanten, zumindest teilweise physikalisch unabhängigen Netzpfade (50, 51) des Bahnautomatisierungsnetzes (100) verwendet.

2. Bahnautomatisierungsnetz (100) nach Anspruch 1,
**dadurch gekennzeichnet, dass**
der zumindest eine empfangsseitige Nachrichtenbroker (21) eingerichtet ist, aufgrund der redundanten Übermittlung der Nachricht (N1) empfangene Duplikate der Nachricht (N1') zu verwerfen.

3. Bahnautomatisierungsnetz (100) nach einem der vorangehenden Ansprüche,
**dadurch gekennzeichnet, dass**
die Nachrichtenbroker (30, 40) zwecks Austauschs von Verwaltungsdaten mittels vorkonfigurierter Multicast-Gruppen untereinander kommunikationstechnisch verbunden sind.

4. Bahnautomatisierungsnetz (100) nach einem der vorangehenden Ansprüche,
**dadurch gekennzeichnet, dass**
das Bahnautomatisierungsnetz (100) eingerichtet ist, ein verbindungsloses Protokoll, insbesondere das User Datagram Protocol, UDP, als Transportprotokoll zur Übermittlung der Nachricht (N1) zu verwenden.

5. Bahnautomatisierungsnetz (100) nach einem der vorangehenden Ansprüche,
**dadurch gekennzeichnet, dass**
die sendeseitige Anwendung (10) eingerichtet ist, eine Nachricht zu veröffentlichen, die Selektionskriterien in Form des Themas und einer die sendeseitige Anwendung (10) identifizierenden Kennung jeweils in Form einer innerhalb des Bahnautomatisierungsnetzes (100) eineindeutigen Identität umfasst.

6. Bahnautomatisierungsnetz (100) nach einem der vorangehenden Ansprüche,
**dadurch gekennzeichnet, dass**
die sendeseitige Anwendung (10) eingerichtet ist, eine Nachricht zu veröffentlichen, die eine Domänenkennung umfasst, durch die eine Mehrzahl von sendeseitigen Anwendungen (10, 11) als zusammengehörig gekennzeichnet wird.

7. Bahnautomatisierungsnetz (100) nach einem der vorangehenden Ansprüche,
**dadurch gekennzeichnet, dass**
der sendeseitige Nachrichtenbroker (30) eingerichtet ist, die Nachricht (N1) über jeden der zumindest teilweise physikalisch unabhängigen Netzpfade (50, 51) mehrfach zeitversetzt an den empfangsseitigen Nachrichtenbroker (40) oder den zumindest einen der empfangsseitigen Nachrichtenbroker zu übermitteln.

8. Bahnautomatisierungsnetz (100) nach einem der vorangehenden Ansprüche,
**dadurch gekennzeichnet, dass**
zumindest eine der Anwendungen (10, 11, 21) redundant vorhanden ist.

9. Verfahren zum Übermitteln von Nachrichten (N1) in einem Bahnautomatisierungsnetz (100),
- wobei in dem Bahnautomatisierungsnetz (100) ein Publish/Subscribe-System eingerichtet wird
- mit zumindest einer zum Veröffentlichen von Nachrichten eingerichteten sendeseitigen Anwendung (10, 11),
- mit zumindest einem sendeseitigen Nachrichtenbroker (30), wobei jede sendeseitige Anwendung (10, 11) kommunikationstechnisch an den sendeseitigen Nachrichtenbroker (30) oder einen der sendeseitigen Nachrichtenbroker angebunden ist,
- mit zumindest einer zum Empfangen von Nachrichten eingerichteten empfangsseitigen Anwendung (21) sowie
- mit zumindest einem empfangsseitigen Nachrichtenbroker (40), wobei jede empfangsseitige Anwendung (21) kommunikationstechnisch an den empfangsseitigen Nachrichtenbroker (40) oder einen der empfangsseitigen Nachrichtenbroker angebunden ist,
- wobei eine von der sendeseitigen Anwendung oder einer (z.B. 10) der sendeseitigen Anwendungen (10, 11) veröffentlichte Nachricht (N1) von dem betreffenden sendeseitigen Nachrichtenbroker (30) anhand eines in der Nachricht (N1) angegebenen Themas auf zumindest zwei redundante, zumindest teilweise physikalisch unabhängige Netzpfade (50, 51) des Bahnautomatisierungsnetzes (100) abgebildet wird,
- wobei die Nachricht (N1) simultan über die zumindest zwei Netzpfade (50, 51) an den empfangsseitigen Nachrichtenbroker (40) oder zumindest einen der empfangsseitigen Nachrichtenbroker übermittelt wird, und
- wobei die Nachricht (N1) von dem zumindest einen empfangsseitigen Nachrichtenbroker (40) an die zumindest eine empfangsseitige Anwendung (21) übermittelt wird, wobei die Nachricht (N1) simultan an mehrere empfangsseitige Nachrichtenbroker übermittelt wird, die jeweils zumindest zwei Multicast-Gruppen zugeordnet sind, wobei für jede der Multicast-Gruppen einer der redundanten, zumindest teilweise physikalisch unabhängigen Netzpfade (50, 51) des Bahnautomatisierungsnetzes (100) verwendet wird.

10. Verfahren nach Anspruch 9,
**dadurch gekennzeichnet, dass**
aufgrund der redundanten Übermittlung der Nachricht (N1) empfangene Duplikate (N1') der Nachricht (N1) von dem empfangsseitigen Nachrichtenbroker (40) oder dem zumindest einen der empfangsseitigen Nachrichtenbroker verworfen werden.

11. Verfahren nach einem der Ansprüche 9 oder 10,
**dadurch gekennzeichnet, dass**
durch die Nachrichtenbroker (30, 40) mittels vorkonfigurierter Multicast-Gruppen untereinander Verwaltungsdaten ausgetauscht werden.

12. Verfahren nach einem der Ansprüche 9 bis 11,
**dadurch gekennzeichnet, dass**
ein verbindungsloses Protokoll, insbesondere das User Datagram Protocol, UDP, als Transportprotokoll zur Übermittlung der Nachricht (N1) verwendet wird.

13. Verfahren nach einem der Ansprüche 9 bis 12,
**dadurch gekennzeichnet, dass**
von der sendeseitigen Anwendung (10) eine Nachricht veröffentlicht wird, die Selektionskriterien in Form des Themas und einer die sendeseitige Anwendung (10) identifizierenden Kennung jeweils in Form einer innerhalb des Bahnautomatisierungsnetzes (100) eineindeutigen Identität umfasst.

14. Verfahren nach einem der Ansprüche 9 bis 13,
**dadurch gekennzeichnet, dass**
von der sendeseitigen Anwendung (10) eine Nachricht veröffentlicht wird, die eine Domänenkennung umfasst, durch die eine Mehrzahl von sendeseitigen Anwendungen (10, 11) als zusammengehörig gekennzeichnet wird.

15. Verfahren nach einem der Ansprüche 9 bis 14,
**dadurch gekennzeichnet, dass**
die Nachricht (N1) von dem sendeseitigen Nachrichtenbroker (30) über jeden der zumindest teilweise physikalisch unabhängigen Netzpfade (50, 51) mehrfach zeitversetzt an den empfangsseitigen Nachrichtenbroker (40) oder den zumindest einen der empfangsseitigen Nachrichtenbroker übermittelt wird.

## Claims

1. Railway automation network (100),
- wherein the railway automation network (100) has a publish/subscribe system with
- at least one transmitter-end application (10, 11) configured for the publication of messages,
- at least one transmitter-end message broker (30)
- at least one receiver-end message broker (40) and
- at least one receiver-end application (21) configured for the receipt of messages,
- wherein each transmitter-end application (10, 11) is linked for communication purposes to the transmitter-end message broker (30) or to one of the transmitter-end message brokers,
- wherein the at least one transmitter-end message broker (30) is configured to map a message (N1) published by the transmitter-end application or by one (e.g. 10) of the transmitter-end applications (10, 11) on the basis of a subject specified in the message (N1) onto at least two redundant, at least partly physically independent network paths (50, 51) of the railway automation network (100),
- wherein the railway automation network (100) is configured to transfer the message (N1) simultaneously over the at least two network paths (50, 51) to the receiver-end message broker (40) or to at least one of the receiver-end message brokers,
- wherein each receiver-end application (21) is linked for communication purposes to the receiver-end message broker (40) or to one of the receiver-end message brokers, and
- wherein the receiver-end message broker (40) is configured to transfer the message (N1) to the at least one receiver-end application (21),
wherein
the railway automation network (100) is configured to transfer the message (N1) simultaneously to a number of receiver-end message brokers, which are each assigned to at least two multicast groups, wherein each of the multicast groups uses one of the redundant, at least partly physically independent network paths (50, 51) of the railway automation network (100) .

2. Railway automation network (100) according to claim 1,
**characterised in that**
the at least one receiver-end message broker (21) is configured to discard duplicates of the message (N1') received as a result of the redundant transfer of the message (N1).

3. Railway automation network (100) according to one of the preceding claims,
**characterised in that**
the message brokers (30, 40) are connected for communication with one another by means of pre-configured multicast groups for the purposes of exchanging administration data.

4. Railway automation network (100) according to one of the preceding claims,
**characterised in that**
the railway automation network (100) is configured to use a connectionless protocol, especially the User Datagram Protocol, UDP, as its transport protocol for transfer of the message (N1).

5. Railway automation network (100) according to one of the preceding claims,
**characterised in that**
the transmitter-end application (10) is configured to publish a message that comprises selection criteria in the form of the subject and a code identifying the transmitter-end application (10), in the form of an identity unique within the railway automation network (100) in each case.

6. Railway automation network (100) according to one of the preceding claims,
**characterised in that**
the transmitter-end application (10) is configured to publish a message that comprises a domain identification through which a plurality of transmitter-end applications (10, 11) are identified as belonging together.

7. Railway automation network (100) according to one of the preceding claims,
**characterised in that**
the transmitter-end message broker (30) is configured to transfer the message (N1) multiply offset in time over each of the at least partly physically independent network paths (50, 51) to the receiver-end message broker (40) or to at least one of the receiver-end message brokers.

8. Railway automation network (100) according to one of the preceding claims,
**characterised in that**
at least one of the applications (10, 11, 21) is present redundantly.

9. Method for transferring messages (N1) in a railway automation network (100),
- wherein, in the railway automation network (100), a publish/subscribe system is configured
- with at least one transmitter-end application (10, 11) configured for the publication of messages,
- with at least one transmitter-end message broker (30), wherein each transmitter-end application (10, 11) is linked for communication purposes to the transmitter-end message broker (30) or to one of the transmitter-end message brokers,
- with at least one receiver-end application (21) configured for the receipt of messages and also
- with at least one receiver-end message broker (40), wherein each receiver-end application (21) is linked for the purposes of communication to the receiver-end message broker (40) or to one of the receiver-end message brokers,
- wherein a message (N1) published by the transmitter-end application or by one (e.g. 10) of the transmitter-end applications (10, 11) is mapped by the transmitter-end message broker (30) concerned on the basis of a subject specified in the message (N1) onto at least two redundant, at least partly physically independent network paths (50, 51) of the railway automation network (100),
- wherein the message (N1) is transferred simultaneously over the at least two network paths (50, 51) to the receiver-end message broker (40) or to at least one of the receiver-end message brokers, and
- wherein the message (N1) is transferred by the at least one receiver-end message broker (40) to the at least one receiver-end application (21),
wherein
the message (N1) is transferred simultaneously to a number of receiver-end message brokers, which are each assigned to at least two multicast groups, wherein, for each of the multicast groups, one of the redundant, at least partly physically independent network paths (50, 51) of the railway automation network (100) is used.

10. Method according to claim 9,
**characterised in that**
duplicates (N1') of the message (N1) received as a result of the redundant transfer of the message (N1) are discarded by the receiver-end message broker (40) or by the at least one of the receiver-end message brokers.

11. Method according to one of claims 9 or 10,
**characterised in that**
administration data is exchanged by the message brokers (30, 40) between themselves by means of the pre-configured multicast groups.

12. Method according to one of claims 9 to 11,
**characterised in that**
a connectionless protocol, in particular the User Datagram Protocol, UDP, is used as the transport protocol for transferring the message (N1).

13. Method according to one of claims 9 to 12,
**characterised in that**
a message is published by the transmitter-end application (10) that comprises selection criteria in the form of the subject and a code identifying the transmitter-end application (10), in the form of an identity unique within the railway automation network (100) in each case.

14. Method according to one of claims 9 to 13,
**characterised in that**
a message is published by the transmitter-end application (10) that comprises a domain identification through which a plurality of transmitter-end applications (10, 11) are identified as belonging together.

15. Method according to one of claims 9 to 14,
**characterised in that**
the message (N1) is transferred by the transmitter-end message broker (30) multiply offset in time to the receiver-end message broker (40) or to at least one of the receiver-end message brokers over each of the at least partly physically independent network paths (50, 51).

## Revendications

1. Réseau (100) d'automatisation de voie,
- dans lequel le réseau (100) d'automatisation de voie a un système publish/subscribe, comprenant
- au moins une application (10, 11) du côté de l'émission, conçue pour la publication de messages,
- au moins un broker (30) de message du côté de l'émission,
- au moins un broker (40) de message du côté de la réception, ainsi que
- au moins une application (21) du côté de la réception, conçue pour la réception de messages,
- dans lequel chaque application (10, 11) du côté de l'émission est rattachée, en technique de communication, au broker (30) de message du côté de l'émission ou à l'un des brokers de message du côté de l'émission,
- dans lequel le au moins un broker (30) de message du côté de l'émission est conçu pour représenter, à l'aide d'un thème indiqué dans le message (N1) sur au moins deux trajets (50, 51), redondants et indépendants au moins en partie physiquement, du réseau (100) d'automatisation de voie, un message (N1) publié par l'application du côté de l'émission ou par l'une (par exemple 10) des applications (10, 11) du côté de l'émission,
- dans lequel le réseau (100) d'automatisation de voie est conçu pour transmettre au broker (40) de message du côté de la réception ou au moins à l'un des brokers de message du côté de la réception, le message (N1) simultanément par les au moins deux voies (50, 51) du réseau,
- dans lequel chaque application (21) du côté de la réception est rattachée, en technique de communication, au broker (40) de message du côté de la réception ou à l'un des brokers de message du côté de la réception et
- dans lequel le broker (40) de message du côté de la réception est conçu pour transmettre le message (N1) à la au moins une application (21) du côté de la réception,
dans lequel
le réseau (100) d'automatisation de voie est conçu pour transmettre le message (N1) simultanément à plusieurs brokers de message du côté de la réception, qui sont associés chacun à au moins deux groupes multicast, chacun des groupes multicast utilisant l'un des trajets (51, 51), redondants et indépendants au moins en partie physiquement, du réseau (100) d'automatisation de voie.

2. Réseau (100) d'automatisation de voie suivant la revendication 1,
**caractérisé en ce que**
le au moins un broker (21) de message du côté de la réception est conçu pour rejeter des duplicatas du message (N1'), reçus en raison de la transmission redondante du message (N1).

3. Réseau (100) d'automatisation de voie suivant l'une des revendications précédentes,
**caractérisé en ce que**
les brokers (30, 40) de message sont rattachés, en vue de l'échange de données de gestion, entre eux en technique de communication, au moyen de groupes multicast préconfigurés.

4. Réseau (100) d'automatisation de voie suivant l'une des revendications précédentes,
**caractérisé en ce que**
le réseau (100) d'automatisation de voie est conçu pour utiliser un protocole sans liaison, notamment le protocole User Datagram, UDP, comme protocole de transport pour la transmission du message (N1).

5. Réseau (100) d'automatisation de voie suivant l'une des revendications précédentes,
**caractérisé en ce que**
l'application (10) du côté de l'émission est conçue pour publier un message, qui comprend des critères de sélection sous la forme du thème et une caractérisation identifiant l'application (10) du côté de l'émission, respectivement, sous la forme d'une identité univoque au sein du réseau (100) d'automatisation de voie.

6. Réseau (100) d'automatisation de voie suivant l'une des revendications précédentes,
**caractérisé en ce que**
l'application (10) du côté de l'émission est conçue pour publier un message, qui comprend une caractérisation de domaine, par laquelle une pluralité d'applications (10, 11) du côté de l'émission est caractérisée comme allant ensemble.

7. Réseau (100) d'automatisation de voie suivant l'une des revendications précédentes,
**caractérisé en ce que**
le broker (30) de message du côté de l'émission est conçu pour transmettre, de manière décalée plusieurs fois dans le temps, au broker (40) de message du côté de la réception ou au au moins l'un des brokers de message du côté de la réception, le message (N1) par chacun des trajets (50, 51) du réseau, indépendants au moins en partie physiquement.

8. Réseau (100) d'automatisation de voie suivant l'une des revendications précédentes,
**caractérisé en ce qu'**
au moins l'une des applications (10, 11, 21) est présente de manière redondante.

9. Procédé de transmission de message (N1) dans un réseau (100) d'automatisation de voie,
- dans lequel on organise, dans le réseau (100) d'automatisation de voie, un système publish/subscribe
- ayant au moins une application (10, 11) du côté de l'émission, conçue pour la publication de messages,
- ayant au moins un broker (30) de message du côté de l'émission, chaque application (10, 11) du côté de l'émission étant rattachée, en technique de communication, au broker (30) de message du côté de l'émission ou à l'un des brokers de message du côté de l'émission,
- ayant au moins une application (21) du côté de la réception, conçue pour la réception de messages, ainsi que
- ayant au moins un broker (40) de message du côté de la réception, chaque application (21) du côté de la réception étant rattachée, en technique de communication, au broker (40) de message du côté de la réception ou à l'un des brokers de message du côté de la réception,
- dans lequel on représente, à l'aide d'un thème indiqué dans le message (N1), sur au moins deux trajets (50, 51), redondants et indépendants au moins en partie physiquement, du réseau (100) d'automatisation de voie, par le broker (30) de message concerné du côté de l'émission, un message (N1) publié par l'application du côté de l'émission ou par l'une (par exemple 10) des applications (10, 11) du côté de l'émission,
- dans lequel on transmet le message (N1) simultanément, par les au moins deux trajets (50, 51) du réseau, au broker (40) de message du côté de la réception ou à au moins l'un des brokers de message du côté de la réception, et
- dans lequel on transmet le message (N1), par le au moins un broker (40) de message du côté de la réception, à la au moins une application (21) du côté de la réception,
dans lequel
on transmet le message (N1) simultanément à plusieurs brokers de message du côté de la réception, qui sont associés chacun à au moins deux groupes multicast, dans lequel on utilise, pour chacun des groupes multicast, un trajet (50, 51), redondant et indépendant au moins en partie physiquement, du réseau (100) d'automatisation de voie.

10. Procédé suivant la revendication 9,
**caractérisé en ce que**
l'on rejette le message (N1) par le broker (40) de message du côté de la réception ou par au moins l'un des brokers de message du côté de la réception, des duplicatas (N1') du message (N1) reçus en raison de la transmission redondante du message (N1).

11. Procédé suivant l'une des revendications 9 ou 10,
**caractérisé en ce que**
l'on échange, par les brokers (30, 40) de message, des données de gestion entre elles, au moyen de groupes multicast préconfigurés.

12. Procédé suivant l'une des revendications 9 à 11,
**caractérisé en ce que**
l'on utilise un protocole sans liaison, notamment le protocole User Datagram, UDP, comme protocole de transport pour la transmission du message (N1).

13. Procédé suivant l'une des revendications 9 à 12,
**caractérisé en ce que**
l'on publie, par l'application (10) du côté de l'émission, un message, qui comprend des critères de sélection sous la forme du thème et une caractérisation identifiant l'application (10) du côté de l'émission, respectivement, sous la forme d'une identité univoque au sein du réseau (100) d'automatisation de voie.

14. Procédé suivant l'une des revendications 9 à 13,
**caractérisé en ce que**
l'on publie, par l'application (10) du côté de l'émission, un message, qui comprend une caractérisation de domaine, par laquelle on caractérise une pluralité d'applications (10, 11) du côté de l'émission comme allant ensemble.

15. Procédé suivant l'une des revendications 9 à 14,
**caractérisé en ce que**
l'on transmet plusieurs fois, de manière décalée dans le temps, au broker (40) de message du côté de la réception ou à le au moins un broker de message du côté de la réception, le message (N1) par le broker (30) de message du côté de l'émission, par chacun des trajets (50, 51) du réseau, indépendants au moins en partie physiquement.
